# EUROPEAN PATENT APPLICATION

(11) **EP 4 539 182 A1**
(43) Date of publication of application: **16.04.2025**
(21) Application number: 24767985.5
(22) Date of filing: 28.08.2024
(51) Int. Cl.: H01M 10/04, H01M 50/531, H01M 50/533, H01M 50/247

(54) **CURVED BATTERY AND ELECTRONIC DEVICE COMPRISING SAME**

(30) Priority: 29.08.2023 KR 20230113855; 31.10.2023 KR 20230147926
(71) Applicant: Samsung Electronics Co., Ltd, Suwon-si, Gyeonggi-do 16677 (KR)
(72) Inventor: PARK, Hyungwoo, Suwon-si Gyeonggi-do 16677 (KR); KIM, Shihyun, Suwon-si Gyeonggi-do 16677 (KR)
(74) Representative: HGF
(86) International application number: PCT/KR2024/012908
(87) International publication number: WO 2025/048501

(57) **Abstract**

A curved battery according to an embodiment of the disclosure may include a battery cell having a curved cross-section, and a housing disposed outside the battery cell. The battery cell may include a positive electrode plate, a negative electrode plate, a separator disposed between the positive electrode plate and the negative electrode plate, a first electrode tab electrically connected to at least a portion of the positive electrode plate, and a second electrode tab electrically connected to at least a portion of the negative electrode plate. The positive electrode plate, the negative electrode plate, and the separator may be wound and disposed. At least one of the first electrode tab and the second electrode tab may be arranged to correspond to the length of the battery cell. Various other embodiments may be possible.

## Description

### [Technical Field]

The disclosure relates to a curved battery capable of maintaining a bent shape and an electronic device including the same.

### [Background Art]

An electronic device may refer to a device that performs a predetermined function according to a program installed therein, such as an augmented reality (AR) device, a virtual reality (VR) device, a mixed reality (MR) device, an extended reality (XR) device, a smartphone, a tablet personal computer (PC), a wearable electronic device, a smartwatch, a home appliance, an electronic notebook, a portable multimedia player, a mobile communication terminal, a tablet PC, a video/audio device, a desktop/laptop computer, or a vehicle navigation system. These electronic devices may include a battery for driving (e.g., a secondary battery).

Unlike a primary battery, which cannot be recharged, the secondary battery can be repeatedly charged and discharged, and the use of secondary batteries is increasing because they are economical and environmentally friendly. Recently, the types and shapes of electronic devices using secondary batteries have become more diverse, and the shapes of the batteries should be changed to match the shapes of the electronic devices.

The above-described contents are presented as background information only to assist with an understanding of the disclosure. No determination and no assertion have been made as to whether any of the above might be applicable as prior art with regard to the disclosure.

### [Disclosure of Invention]

### [Solution to Problem]

An electronic device having a curved surface shape (e.g., a smart ring or a smart band) may be equipped with a battery that is bent to match the shape of the inner space of the electronic device (e.g., a curved battery). Curved batteries have the characteristic of being restored (e.g., unfolded) to their original plat shape over time due to the restoring force of a first electrode plate (e.g., a positive electrode plate, a positive electrode layer, or a positive electrode film), a second electrode plate (e.g., a negative electrode plate, a negative electrode layer, or a negative electrode film), and a separator (e.g., a separation plate or a separation layer).

An embodiment of the disclosure may provide a curved (or non-flat, non-planar, arcuate, or bent) battery that is capable of maintaining a bent (or curved, non-flat, non-planar, or arcuate) shape and an electronic device including the same.

The technical subjects pursued in the disclosure may not be limited to the above mentioned technical subjects, and other technical subjects which are not mentioned may be clearly understood, through the following descriptions, by those skilled in the art to which the disclosure pertains.

A curved (or non-flat, non-planar, arcuate, or bent) battery according to an embodiment of the disclosure may include a battery cell having a curved (or non-rectangular, arcuate, or bent (i.e. including at least one bend)) cross-section, and a housing disposed outside the battery cell. The battery cell may include a positive electrode plate, a negative electrode plate, a separator disposed between the positive electrode plate and the negative electrode plate, a first electrode tab electrically connected to at least a portion of the positive electrode plate, and a second electrode tab electrically connected to at least a portion of the negative electrode plate. The positive electrode plate, the negative electrode plate, and the separator may be wound and disposed (or, in other words, they may be wound or rolled together in a wound or rolled configuration or arrangement, having a spiral cross section, for example comprising a plurality of turns or layers). At least one of the first electrode tab and the second electrode tab may be arranged to correspond to the length of the battery cell.

An electronic device according to an embodiment of the disclosure may include a flexible display, a display driver integrated circuit (IC) configured to drive the flexible display, a processor configured to control the operation of the display driver IC, memory operatively connected to the processor, and a battery configured to supply power to the display driver IC and the processor. The battery may include a battery cell having a curved (or non-rectangular, arcuate, or bent) cross-section, and a housing disposed outside the battery cell. The battery cell may include a positive electrode plate, a negative electrode plate, a separator disposed between the positive electrode plate and the negative electrode plate, a first electrode tab electrically connected to at least a portion of the positive electrode plate, and a second electrode tab electrically connected to at least a portion of the negative electrode plate. The positive electrode plate, the negative electrode plate, and the separator may be wound and disposed (or, in other words, they may be wound or rolled together in a wound or rolled configuration or arrangement, having a spiral cross section, for example comprising a plurality of turns or layers). At least one of the first electrode tab and the second electrode tab may be arranged to correspond to the length of the battery cell.

A curved (or non-flat, non-planar, arcuate, or bent) battery according to an embodiment of the disclosure may include a battery cell having a curved (or non-flat, non-planar, arcuate, or bent) shape, and at least one support member arranged to support said battery cell to maintain said shape. In other words, the at least one support member may be arranged to support the battery cell in said shape, for example so as to resist a change in shape that could otherwise result from a resilience of the battery cell urging the battery cell to return to a previous state or shape (such as a flat, non-curved, planar, straight, or unbent shape). In certain embodiments, the at least one support member may be an electrode tab electrically connected to a component of the battery cell (e.g. to a positive or negative electrode plate of the battery cell), and so may have dual function (supporting the battery cell in its curved shape, and providing electrical connection). The at least one support member may have a curved (or non-flat, non-planar, arcuate, or bent) shape, for example corresponding to the shape of the battery cell). The at least one support member may comprise a ductile material (for example a metal), and at least a portion of the at least one support member may be work-hardened (for example by bending).

The, or each, work-hardened portion of the at least one support member may comprise at least one of a notch, groove, hole, or perforation arranged to reduce a cross-sectional area of the respective support member. The battery cell may, for example, comprise a positive electrode plate, a negative electrode plate, and a separator disposed between the positive electrode plate and the negative electrode plate, these three components being wound or rolled together (e.g. around a winding or rolling axis) in a wound or rolled configuration or arrangement, having a spiral cross section, for example comprising a plurality of turns or layers. This spiral cross section may also be curved, arcuate, or bent, and the at least one support member may be arranged to support the battery cell against (i.e. to resist) straightening of the cross section under forces arising from resilience of the battery cell components. At least one support member may be arranged to extend in a direction perpendicular to the winding or rolling axis or plane, and may be arranged to support the battery cell along at least a portion (e.g. 50% to 100%) of a length of the battery cell's cross section.

An electronic device according to an embodiment of the disclosure may include a flexible display, a display driver integrated circuit (IC) configured to drive the flexible display, a processor configured to control the operation of the display driver IC, memory operatively connected to the processor, and a battery configured to supply power to the display driver IC and the processor, the battery being in accordance with any one of the embodiments disclosed in the preceding paragraph.

A curved battery according to an embodiment of the disclosure is capable of maintaining a bent shape.

A curved battery according to an embodiment of the disclosure is configured such that at least one of the first electrode tab and the second electrode tab corresponds to the length of the battery cell. Thus, it is possible to prevent the bent battery cell from being restored (e.g., unfolded) to its original shape and to make the bent battery cell maintain the bent shape.

Advantageous effects obtainable from the disclosure may not be limited to the above mentioned effects, and other effects which are not mentioned may be clearly understood, through the following descriptions, by those skilled in the art to which the disclosure pertains.

Various other effects understood directly or indirectly through the present document may be provided.

### [Brief Description of Drawings]

With regard to the description of the drawings, the same or like reference signs may be used to designate the same or like elements.
FIG. 1 is a block diagram of an electronic device according to an embodiment of the disclosure within a network environment.
FIG. 2 is a diagram illustrating electronic devices having a curved surface shape.
FIG. 3 is a perspective view illustrating a curved battery according to an embodiment of the disclosure.
FIG. 4 is an exploded perspective view illustrating a curved battery according to an embodiment of the disclosure.
FIG. 5 is a view illustrating a non-bent battery cell.
FIG. 6 is a view illustrating a bent battery cell.
FIG. 7 is a view illustrating a bent battery cell.
FIG. 8 is a view illustrating a bent battery cell.
FIG. 9 is a view illustrating a bent battery cell.
FIG. 10 is a view illustrating the shape of an electrode tab of a curved battery according to an embodiment of the disclosure.
FIG. 11 is a view illustrating the shape of an electrode tab of a curved battery according to an embodiment of the disclosure.
FIG. 12 is a view illustrating the shape of an electrode tab of a curved battery according to an embodiment of the disclosure.
FIG. 13 is a view illustrating the shape of an electrode tab of a curved battery according to an embodiment of the disclosure.
FIG. 14 is a view illustrating the shape of an electrode tab of a curved battery according to an embodiment of the disclosure.

It is important to note that throughout the drawings, the same reference symbols are used to depict the same or similar elements, features, and structures.

### [Mode for the Invention]

The following description with reference to the accompanying drawings is provided to assist in comprehensive understanding of an embodiment of the disclosure as defined by the claims and equivalents thereof. The description includes various specific details to assist in the understanding, but the details are to be regarded merely as examples. Accordingly, those skill in the art will recognize that various changes and modifications may be made to an embodiment set forth herein without departing from the scope and spirit of the disclosure. In addition, descriptions of well-known functions and configurations may be omitted for the sake of clarity and conciseness.

The terms and words used in the following description and the claims are not limited to the bibliographical meanings thereof, but are merely used by the inventors to enable clear and consistent understanding of the disclosure. Accordingly, it will be apparent to those skilled in the art that the following description of various embodiments of the disclosure is not intended to limit the disclosure as defined by the appended claims and equivalents thereof, but is provided merely for the purpose of illustration.

It is to be understood that the expressions in singular forms include plural referents unless the context clearly dictates otherwise. Therefore, for example, reference to "a component surface" includes reference to one or more such surfaces.

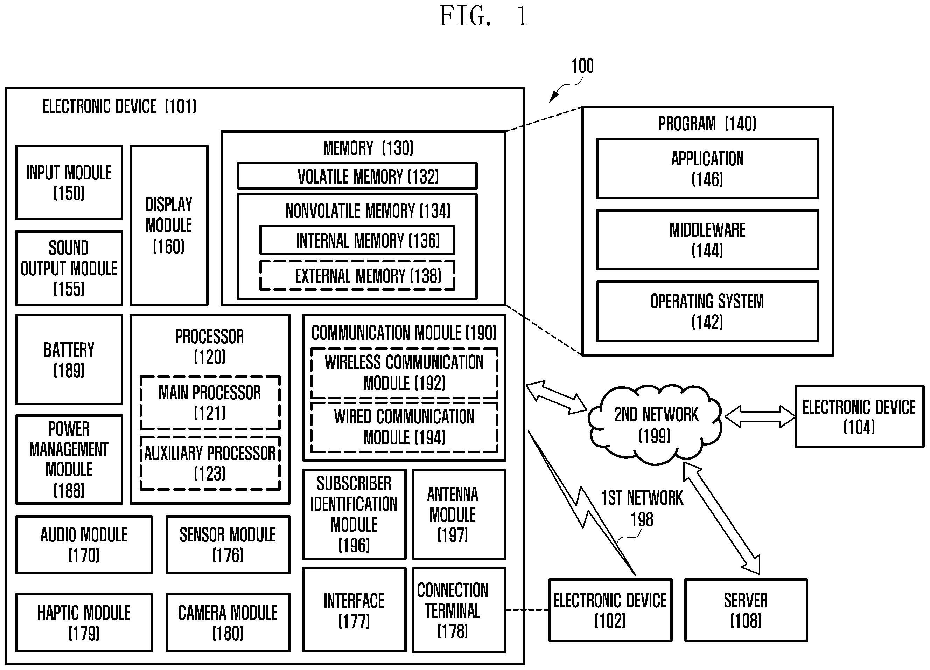

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to an embodiment, a display module 160 may include a flexible display configured to be foldable or unfoldable.

According to an embodiment, the display module 160 may include a flexible display that is arranged to be slidable (e.g., to be slidable in the x-axis direction and the y-axis direction) to provide a screen (e.g., a display screen).

According to an embodiment, the display module 160 may be referred to as a transformable display (e.g., a stretchable display, an expandable display, or a slide-in/out display).

According to an embodiment, the display module 160 may include a display driver IC (DDIC) (e.g., a display driver) configured to drive the display.

According to an embodiment, the DDIC may receive image information including image data or an image control signal corresponding to a command for controlling the image data from another component of an electronic device (e.g., the electronic device 101 in FIG. 1) via an interface module.

According to an embodiment, the image information may be received from a processor (e.g., the processor 120 in FIG. 1) (e.g., the main processor 121 in FIG. 1) (e.g., an application processor), or an auxiliary processor (e.g., the auxiliary processor 123 in FIG. 1) (e.g., a graphics processor) operated independently from the function of the main processor 121.

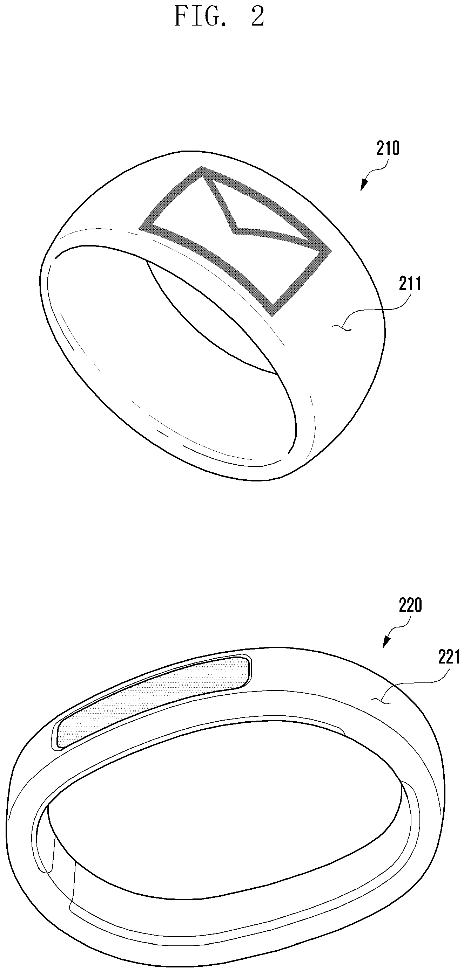

FIG. 2 is a view illustrating electronic devices having a curved surface shape.

Referring to FIG. 2, examples of electronic devices having a curved surface shape include a ring-type electronic device 210 (e.g., a smart ring) (e.g., the electronic device 101 in FIG. 1) or a band-type electronic device 220 (e.g., a smart band) (e.g., the electronic device 101 in FIG. 1).

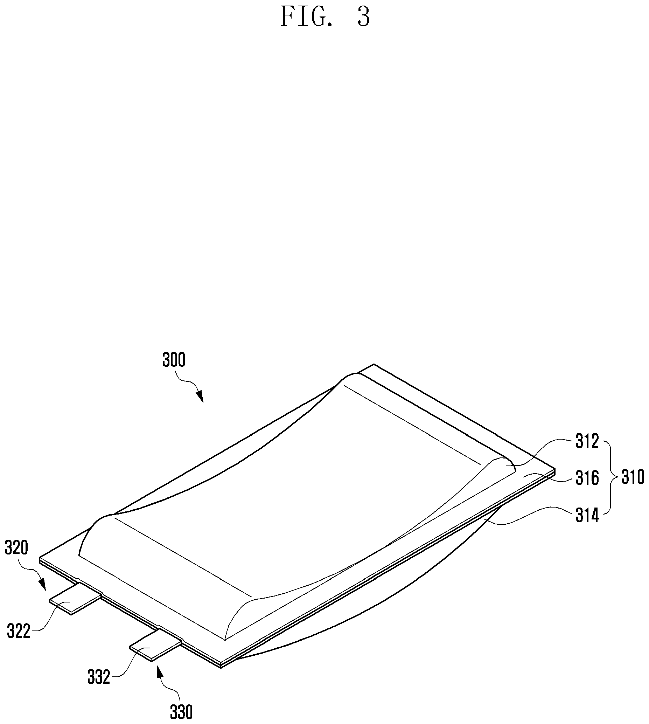

According to an embodiment, the ring-type electronic device 210 may have a circular outer shape 211. The ring-type electronic device 210 may include a bent curved battery (e.g., the curved battery 300 of FIG. 3) as a battery (e.g., the battery 189 in FIG. 1) disposed therein.

According to an embodiment, the band-type electronic device 220 may have an oval outer shape 221. The band-type electronic device 220 may include a bent curved battery (e.g., the curved battery 300 of FIG. 3) as a battery (e.g., the battery 189 in FIG. 1) disposed therein. According to an embodiment, the outer shape 221 of the band-type electronic device 220 is not limited to the circular or oval shape, and may be formed in various shapes (e.g., a shape including curves and straight lines).

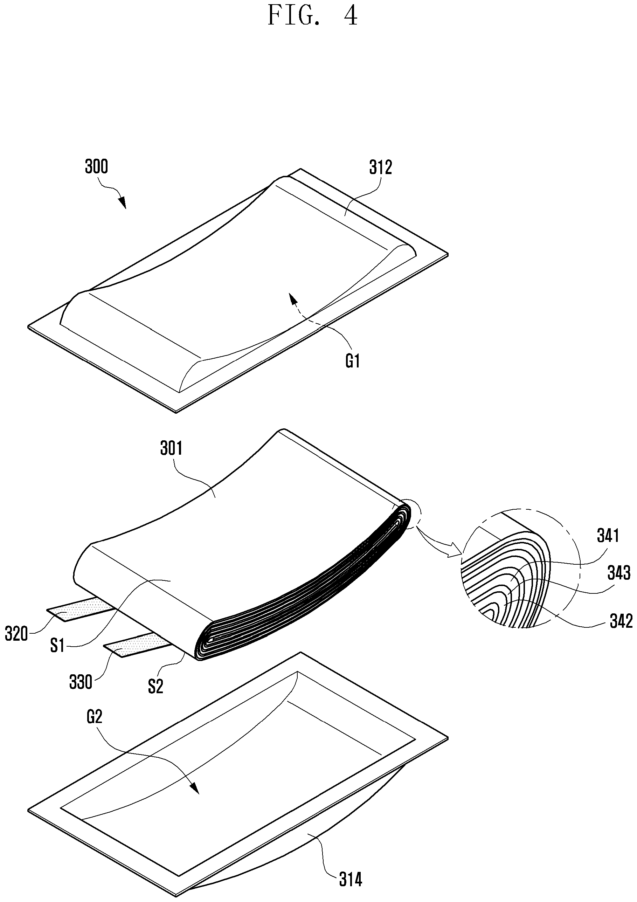

FIG. 3 is a perspective view illustrating a curved battery according to an embodiment of the disclosure. FIG. 4 is an exploded perspective view illustrating the curved battery according to an embodiment of the disclosure.

Referring to FIGS. 3 and 4, a curved battery 300 according to an embodiment of the disclosure may include a battery cell 301 (e.g., a battery pouch) and a housing 310 (e.g., a case or a pouch). For example, the housing 310 may include a first housing element 312 and a second housing element 314. The first housing element 312 and the second housing element 314, each of which has a space formed therein, may be placed in contact with each other, and the first housing element 312 and the second housing element 314 may be sealed.

According to an embodiment, the housing 310 may include an inner space, and a battery cell 301 may be disposed in the inner space. The housing 310 may include curved surface shapes G1 and G2 depending on the shape of the external shape 211 of the electronic device 210.

According to an embodiment, the housing 310 may include an inner space having the curved surface shapes G1 and G2 corresponding to the shapes of surfaces S1 and S2 (e.g., curved surface shapes) of the battery cell 301 (e.g., a battery pouch). The battery cell 301 may be disposed in the inner space of the housing 310, and the battery cell 301 may be sealed by the housing 310.

For example, the surface of the battery cell 301 may include a concave first surface S1 and a convex second surface S2. For example, after fabricating the battery cell 301 in a flat shape, an external pressure may be applied to the battery cell to have the concave first surface S1 and the convex second surface S2. For example, the battery cell 301 may have a curved shape when fabricated. For example, the concave first surface S1 may be the bottom surface of the battery cell 301, and the convex second surface S2 may be the top surface of the battery cell 301. For example, the concave first surface S1 may be the top surface of the battery cell 301, and the convex second surface S2 may be the bottom surface of the battery cell 301.

According to an embodiment, the battery cell 301 may include a first electrode plate 341 (e.g., a positive electrode plate, a positive electrode layer, a positive electrode film), a second electrode plate 342 (e.g., a negative electrode plate, a negative electrode layer, or a negative electrode film), a separator 343 (e.g. a separation plate or a separation layer), a first electrode tab 320 (e.g., a first electrode lead, a positive electrode tab, or a positive electrode lead), and a second electrode tab 330 (e.g., a second electrode lead, a negative electrode tab, or a negative electrode lead).

For example, the first electrode tab 320 (e.g., a first electrode lead, a positive electrode tab, or a positive electrode lead) may include not only a portion that overlaps the first electrode plate 341 (e.g., a positive electrode plate, a positive electrode layer, or a positive electrode film), but also a portion exposed to the outside of the housing 310.

For example, the second electrode tab 330 (e.g., a second electrode lead, a negative electrode tab, or a negative electrode lead) may include not only a portion that overlaps the second electrode plate 342 (e.g., a negative electrode plate, a negative electrode layer, or a negative electrode film), but also a portion exposed to the outside of the housing 310.

For example, the first electrode tab 320 (e.g., a first electrode lead, a positive electrode tab, or a positive electrode lead) and the second electrode tab 330 (e.g., a second electrode lead, a negative electrode tab, or a negative electrode lead) may contain a conductive metallic material.

According to an embodiment, the separator 343 (e.g., a separation plate or a separation layer) may be disposed between the first electrode plate 341 (e.g., a positive electrode plate, a positive electrode layer, or a positive electrode film) and the second electrode plate 342 (e.g., a negative electrode plate, a negative electrode layer, or a negative electrode film) to electrically separate the first electrode plate 341 (e.g., a positive electrode plate, a positive electrode layer, or a positive electrode film) and the second electrode plate 342 (e.g., a negative electrode plate, a negative electrode layer, or a negative electrode film).

For example, the first electrode plate 341 (e.g., a positive electrode plate, a positive electrode layer, or a positive electrode film) and the second electrode plate 342 (e.g., a negative electrode plate, a negative electrode layer, or a negative electrode film) may have different electrical polarities.

According to an embodiment, the battery cell 301 may be wound in the form of a jelly-roll after sequentially stacking the first electrode plate 341 (e.g., a positive electrode plate, a positive electrode layer, or a positive electrode film), the separator 343 (e.g., a separation plate or a separation layer), and the second electrode plate 342 (e.g., a negative electrode plate, a negative electrode layer, or a negative electrode film). Thus, the first electrode plate, the second electrode plate, and the separator may each initially be in the form of a respective flexible plate, layer, or sheet, and the battery cell may be formed by stacking the three component layers together, then rolling or winding them together about a winding or rolling axis or plane. The resultant wound or rolled structure may be described as being in the form of a jelly-roll, or Swiss-roll, and has a spiral or coiled cross section, for example comprising a plurality of turns, windings, or layers.

According to an embodiment, the battery cell 301 may be formed by repeatedly stacking the first electrode plate 341 (e.g., a positive electrode plate, a positive electrode layer, or a positive electrode film), the separator 343 (e.g., a separation plate or a separation layer), and the second electrode plate 342 (e.g., a negative electrode plate, a negative electrode layer, or a negative electrode film).

According to an embodiment, the first electrode plate 341 (e.g., a positive electrode plate, a positive electrode layer, or a positive electrode film) may include a first active material portion to which a first active material is applied and a first uncoated portion to which the first active material is not applied. The first active material portion may be formed by applying the first active material to a portion of at least one surface of, for example, an aluminum plate, and the remaining portion of the aluminum plate to which the first active material is not applied may become the first uncoated portion.

For example, the first active material may be a positive-polarizing material and may include a lithium-containing transition metal oxide or a lithium chalcogenide compound, such as LiCoO₂, LiNiO₂, LiMnO₂, or LiMnO₄.

According to an embodiment, the second electrode plate 342 (e.g., a negative electrode plate, a negative electrode layer, or a negative electrode film) may include a second active material portion to which a second active material is applied and a second uncoated portion to which the second active material is not applied. The second active material portion may be formed by applying the second active material to a portion of at least one surface of, for example, an aluminum plate (or a copper plate), and the remaining portion of the aluminum plate to which the second active material is not applied may become the second uncoated portion.

For example, the second active material may be a negative-polarizing material, and may include a carbon material such as crystalline carbon, amorphous carbon, carbon composite, or carbon fiber, a lithium metal, or a lithium alloy.

According to an embodiment, the separator 343 (e.g., a separation plate or a separation layer) may be a porous polymer film such as a polyethylene or polypropylene film.

For example, the separator 343 (e.g., a separation plate or a separation layer) may be in the form of a woven or non-woven fabric containing polymer fibers. For example, the separator 343 (e.g., a separation plate or a separation layer) may also contain ceramic particles.

For example, the separator 343 (e.g., a separation plate or a separation layer) may be formed as an independent film.

For example, the separator 343 (e.g., a separation plate or a separation layer) may be formed by forming a non-conductive porous layer on the first electrode plate 341 (e.g., a positive electrode plate, a positive electrode layer, or a positive electrode film) or the second electrode plate 342 (e.g., a negative electrode plate, a negative electrode layer, or a negative electrode film).

For example, the separator 343 (e.g., a separation plate or a separation layer) may be provided to electrically separate the first electrode plate 341 (e.g., a positive electrode plate, a positive electrode layer, or a positive electrode film) and the second electrode plate 112.

According to an embodiment, the first electrode tab 320 (e.g., a first electrode lead, a positive electrode tab, or a positive electrode lead) and the second electrode tab 330 (e.g., a second electrode lead, a negative electrode tab, or a negative electrode lead) may be disposed in the longitudinal direction of the battery cell 301.

For example, in order to ensure that the battery cell 301 can be electrically connected to external electronic components, the first electrode tab 320 (e.g., a first electrode lead, a positive electrode tab, or a positive electrode lead) and the second electrode tab 330 may be at least partially exposed to the outside of the housing 310.

According to an embodiment, the first electrode tab 320 (e.g., a first electrode lead, a positive electrode tab, or a positive electrode lead) may be electrically connected to the first electrode plate 341 (e.g., a positive electrode plate, a positive electrode layer, or a positive electrode film). For example, the first electrode tab 320 (e.g., a first electrode lead, a positive electrode tab, or a positive electrode lead) may be electrically bonded (e.g., joined) to the first uncoated portion of the first electrode plate 341 (e.g., a positive electrode plate, a positive electrode layer, or a positive electrode film) by welding.

According to an embodiment, the second electrode tab 330 (e.g., a second electrode lead, a negative electrode tab, or a negative electrode lead) may be electrically connected to the second electrode plate 342 (e.g., a negative electrode plate, a negative electrode layer, or a negative electrode film). For example, the second electrode tab 330 (e.g., a second electrode lead, a negative electrode tab, or a negative electrode lead) may be electrically bonded (e.g., joined) to the second uncoated portion of the second electrode plate 342 (e.g., a negative electrode plate, a negative electrode layer, or a negative electrode film) by welding.

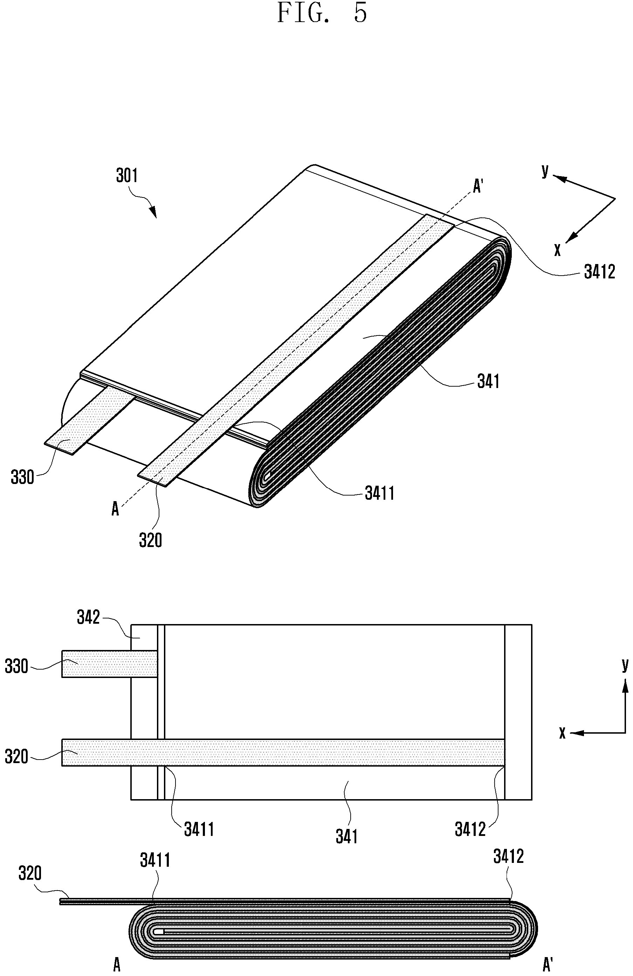

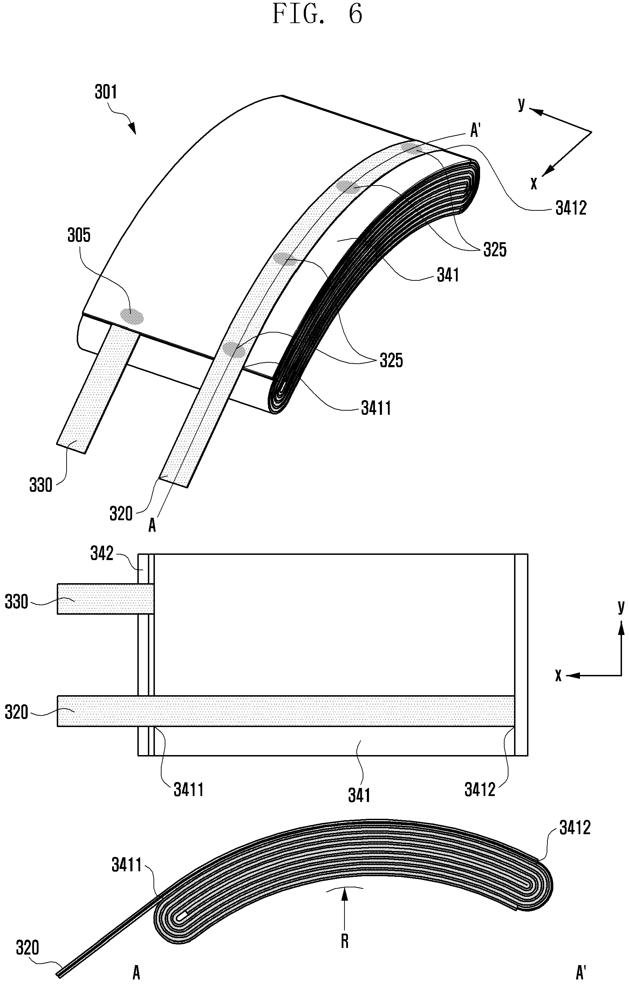

FIG. 5 is a view illustrating a non-bent battery cell. In other words, FIG.5 illustrates a battery-cell in an initial flat, generally planar, un-bent, straight, or uncurved configuration, with the layers wound around a flat winding plane. FIG. 6 is a view illustrating a bent battery cell.

Referring to FIGS. 3 to 6, in the manufacturing process of the battery cell 301 (e.g., a battery pouch), a non-bent battery cell (e.g., the battery cell 301 in FIG. 5) may be placed on a mold (e.g., a jig) having a predetermined curvature (or a predetermined shape), and then the battery cell 301 may be pressed to form a bent battery cell (e.g., the battery cell 301 in FIG. 6).

According to an embodiment, with reference to the cross section of the battery cell 301 (e.g., the cross section taken along line A-A' in FIG. 6), the battery cell 301 may include a curved surface. For example, at least a portion of a stack surface for the first electrode plate 341 (e.g., a positive electrode plate, a positive electrode layer, or a positive electrode film), the second electrode plate 342 (e.g., a negative electrode plate, a negative electrode layer, or a negative electrode film), and the separator 343 (e.g., a separation plate or a separation layer) may have the shape of a curved surface.

According to an embodiment, the curve of the battery cell 301 may have a curvature radius R from 50 mm to 500 mm. Without being limited thereto, the curvature radius R of the curve of the battery cell 301 may be 50 mm or less to match the shape of an electronic device (e.g., the electronic device 210 or 220 of FIG. 2) to which the curved battery 300 is applied. In addition, the curvature radius R of the curve of the battery cell 301 may be 500 mm or more to match the shape of an electronic device (e.g., the electronic device 210 or 220 of FIG. 2) to which the curved battery 300 is applied.

According to an embodiment, the bent battery cell 301 may have the characteristic of being restored (e.g., unfolded) to its original plate shape over time by the restoring force of the first electrode plate 341 (e.g., a positive electrode plate, a positive electrode layer, or a positive electrode film), the second electrode plate 342 (e.g., a negative electrode plate, a negative electrode layer, or a negative electrode film), and the separator 343 (e.g., a separation plate or a separation layer). In other words, the resilience of one or more of these layers may urge the curved structure to straighten or flatten, at least partially.

According to an embodiment, in the curved battery 300 according to an embodiment of the disclosure, in order to prevent the bent shape of the battery cell 301 from being deformed (e.g., changed), at least one of the first electrode tab 320 (e.g., a first electrode lead, a positive electrode tab, or a positive electrode lead) and the second electrode tab 330 (e.g., a second electrode lead, a negative electrode tab, or a negative electrode lead) may be arranged to correspond to the length of the battery cell 301. In other words, at least one of the first and second electrode tabs may be arranged to extend along a length of the battery cell, and/or to have a length equal to, or greater than, a length of the battery cell in a direction generally perpendicular to the winding axis or winding plane.

For example, the first electrode tab 320 (e.g., a first electrode lead, a positive electrode tab, or a positive electrode lead) may include not only a portion that overlaps the first electrode plate 341 (e.g., a positive electrode plate, a positive electrode layer, or a positive electrode film), but also a portion that is disposed outside the housing 310 (e.g., the portion 322 of the first electrode tab 320 in FIG. 3 that is disposed outside the housing 310).

For example, the second electrode tab 330 (e.g., a second electrode lead, a negative electrode tab, or a negative electrode lead) may include not only a portion that overlaps the second electrode plate 342 (e.g., a negative electrode plate, a negative electrode layer, or a negative electrode film), but also a portion that is disposed outside the housing 310 (e.g., the portion 332 of the second electrode tab 330 in FIG. 3 that is disposed outside the housing 310). According to an embodiment, the first electrode tab 320 (e.g., a first electrode lead, a positive electrode tab, or a positive electrode lead) may be electrically bonded (e.g., welded) to at least a portion of the first electrode plate 341 (e.g., a positive electrode plate, a positive electrode layer, or a positive electrode film).

According to an embodiment, the first electrode tab 320 (e.g., a first electrode lead, a positive electrode tab, or a positive electrode lead) may be arranged on the uppermost surface of the first electrode plate 341 (e.g., a positive electrode plate, a positive electrode layer, or a positive electrode film) to correspond to the length of the battery cell 301. For example, the first electrode tab 320 (e.g., a first electrode lead, a positive electrode tab, or a positive electrode lead) may be arranged above or below the uppermost surface of the first electrode plate 341 (e.g., a positive electrode plate, a positive electrode layer, or a positive electrode film).

According to an embodiment, the first electrode tab 320 (e.g., a first electrode lead, a positive electrode tab, or a positive electrode lead) may be arranged on the lowermost surface of the first electrode plate 341 (e.g., a positive electrode plate, a positive electrode layer, or a positive electrode film) to correspond to the length of the battery cell 301. For example, the first electrode tab 320 (e.g., a first electrode lead, a positive electrode tab, or a positive electrode lead) may be arranged above or below the lowermost surface of the first electrode plate 341 (e.g., a positive electrode plate, a positive electrode layer, or a positive electrode film).

According to an embodiment, the first electrode tab 320 (e.g., a first electrode lead, a positive electrode tab, or a positive electrode lead) may be arranged to correspond to the uppermost surface (or the lowermost surface) of the first electrode plate 341 (e.g., a positive electrode plate, a positive electrode layer, or a positive electrode film) from a first side 3411 to a second side 3412 of the uppermost surface (or the lowermost surface).

According to an embodiment, a portion of the first electrode tab 320 may be disposed to overlap the first electrode plate 341, and the portion 322 that does not overlap the first electrode plate 341 may be disposed to be exposed outside the housing 310. The first electrode tab 320 may be electrically bonded (e.g., welded) at one or more points (e.g., multiple points 325) in the area where it is disposed to overlap the first electrode plate 341.

According to an embodiment, the first electrode tab 320 (e.g., a first electrode lead, a positive electrode tab, or a positive electrode lead) may be electrically bonded (e.g., welded) to the uppermost surface of the first electrode plate 341 (e.g., a positive electrode plate, a positive electrode layer, or a positive electrode film).

According to an embodiment, the first electrode tab 320 (e.g., a first electrode lead, a positive electrode tab, or a positive electrode lead) may be electrically bonded (e.g., welded) to the lowermost surface of the first electrode plate 341 (e.g., a positive electrode plate, a positive electrode layer, or a positive electrode film).

According to an embodiment, the second electrode tab 330 (e.g., a second electrode lead, a negative electrode tab, or a negative electrode lead) may be electrically bonded (e.g., welded) to at least a portion of the second electrode plate 342 (e.g., a negative electrode plate, a negative electrode layer, or a negative electrode film).

According to an embodiment, the second electrode tab 330 (e.g., a second electrode lead, a negative electrode tab, or a negative electrode lead) may be arranged on the uppermost surface of the second electrode plate 342 (e.g., a negative electrode plate, a negative electrode layer, or a negative electrode film) on one side portion of the battery cell 301.

According to an embodiment, the second electrode tab 330 (e.g., a second electrode lead, a negative electrode tab, or a negative electrode lead) may be arranged on the lowermost surface of the second electrode plate 342 (e.g., a negative electrode plate, a negative electrode layer, or a negative electrode film) to correspond to the length of the battery cell 301. For example, the second electrode tab 330 (e.g., a second electrode lead, a negative electrode tab, or a negative electrode lead) may be arranged above or below the lowermost surface of the second electrode plate 342 (e.g., a negative electrode plate, a negative electrode layer, or a negative electrode film).

According to an embodiment, a portion of the second electrode tab 330 may be disposed to overlap the second electrode plate 342, and the portion 332 that does not overlap the second electrode plate 342 may be disposed to be exposed outside the housing 310. The second electrode tab 330 may be electrically bonded (e.g., welded) at one or more points (e.g., on a side portion 305) in the area where it is disposed to overlap the second electrode plate 342.

According to an embodiment, the second electrode tab 330 (e.g., a second electrode lead, a negative electrode tab, or a negative electrode lead) may be electrically bonded (e.g., welded) to the uppermost surface of the second electrode plate 342 (e.g., a negative electrode plate, a negative electrode layer, or a negative electrode film).

According to an embodiment, the second electrode tab 330 (e.g., a second electrode lead, a negative electrode tab, or a negative electrode lead) may be electrically bonded (e.g., welded) to the lowermost surface of the second electrode plate 342 (e.g., a negative electrode plate, a negative electrode layer, or a negative electrode film).

Since the first electrode tab 320 (e.g., a first electrode lead, a positive electrode tab, or a positive electrode lead) is arranged to correspond to the uppermost surface (or the lowermost surface) of the first electrode plate 341 (e.g., a positive electrode plate, a positive electrode layer, or a positive electrode film) from the first side 3411 to the second side 3412, the first electrode tab 320 (e.g., a first electrode lead, a positive electrode tab, or a positive electrode lead) is capable of supporting the battery cell 301. The first electrode tab 320 (e.g., a first electrode lead, a positive electrode tab, or a positive electrode lead) is capable of preventing the bent battery cell 301 from being restored (e.g., unfolded) to its original shape so that the bent shape can be maintained.

In the description made with reference to FIG. 6, it has been described that the first electrode tab 320 (e.g., a first electrode lead, a positive electrode tab, or a positive electrode lead) supports the battery cell 301, but the disclosure is not limited thereto. The second electrode tab 330 (e.g., a second electrode lead, a negative electrode tab, or a negative electrode lead) may extend in length to support the battery cell 301.

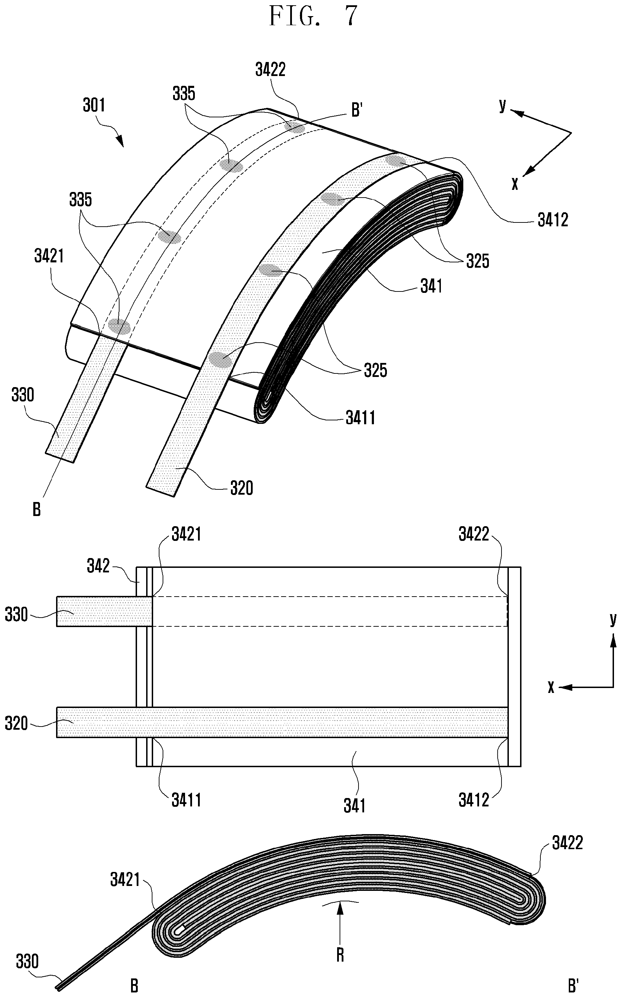

FIG. 7 is a view illustrating a bent battery cell.

Referring to FIGS. 3, 4, and 7, in the manufacturing process of the battery cell 301 (e.g., a battery pouch), a non-bent battery cell (e.g., the battery cell 301 in FIG. 5) may be placed on a mold (e.g., a jig) having a predetermined curvature (or a predetermined shape), and then the battery cell 301 may be pressed to form a bent battery cell (e.g., the battery cell 301 in FIG. 7).

According to an embodiment of the disclosure, in the curved battery 300, in order to prevent the bent shape of the battery cell 701 (e.g., a battery pouch) from being deformed (e.g., changed), the first electrode tab 320 (e.g., a first electrode lead, a positive electrode tab, or a positive electrode lead) and the second electrode tab 330 (e.g., a second electrode lead, a negative electrode tab, or a negative electrode lead) may be arranged to correspond to the length of the battery cell 701.

According to an embodiment, the first electrode tab 320 (e.g., a first electrode lead, a positive electrode tab, or a positive electrode lead) may include not only a portion that overlaps the first electrode plate 341 (e.g., a positive electrode plate, a positive electrode layer, or a positive electrode film), but also a portion that is disposed outside the housing 310 (e.g., the portion 322 of the first electrode tab 320 in FIG. 3 that is disposed outside the housing 310).

According to an embodiment, the first electrode tab 320 (e.g., a first electrode lead, a positive electrode tab, or a positive electrode lead) may be arranged on the lowermost surface of the first electrode plate 341 (e.g., a positive electrode plate, a positive electrode layer, or a positive electrode film) to correspond to the length of the battery cell 301. For example, the first electrode tab 320 (e.g., a first electrode lead, a positive electrode tab, or a positive electrode lead) may be arranged above or below the lowermost surface of the first electrode plate 341 (e.g., a positive electrode plate, a positive electrode layer, or a positive electrode film).

For example, a portion of the first electrode tab 320 may be disposed to overlap the first electrode plate 341, and the portion 322 that does not overlap the first electrode plate 341 may be disposed to be exposed outside the housing 310. The first electrode tab 320 may be electrically bonded (e.g., welded) at one or more points (e.g., multiple points 325) in the area where it is disposed to overlap the first electrode plate 341.

For example, the second electrode tab 330 (e.g., a second electrode lead, a negative electrode tab, or a negative electrode lead) may include not only a portion that overlaps the second electrode plate 342 (e.g., a negative electrode plate, a negative electrode layer, or a negative electrode film), but also a portion that is disposed outside the housing 310 (e.g., the portion 332 of the second electrode tab 330 in FIG. 3 that is disposed outside the housing 310).

According to an embodiment, the first electrode tab 320 (e.g., a first electrode lead, a positive electrode tab, or a positive electrode lead) may be electrically bonded (e.g., welded) to at least a portion of the first electrode plate 341 (e.g., a positive electrode plate, a positive electrode layer, or a positive electrode film).

For example, the first electrode tab 320 (e.g., a first electrode lead, a positive electrode tab, or a positive electrode lead) may be arranged on the uppermost surface of the first electrode plate 341 (e.g., a positive electrode plate, a positive electrode layer, or a positive electrode film) to correspond to the length of the battery cell 701.

According to an embodiment, the first electrode tab 320 (e.g., a first electrode lead, a positive electrode tab, or a positive electrode lead) may be arranged to correspond to the uppermost surface (or the lowermost surface) of the first electrode plate 341 (e.g., a positive electrode plate, a positive electrode layer, or a positive electrode film) from the first side 3411 to the second side 3412 of the uppermost surface (or the lowermost surface).

According to an embodiment, the first electrode tab 320 (e.g., a first electrode lead, a positive electrode tab, or a positive electrode lead) may be electrically bonded (e.g., welded) to the first electrode plate 341 (e.g., a positive electrode plate, a positive electrode layer, or a positive electrode film) at multiple points 325. The first electrode tab 320 (e.g., a first electrode lead, a positive electrode tab, or a positive electrode lead) may be electrically bonded (e.g., welded) to the uppermost surface of the first electrode plate 341 (e.g., a positive electrode plate, a positive electrode layer, or a positive electrode film).

According to an embodiment, since the first electrode tab 320 (e.g., a first electrode lead, a positive electrode tab, or a positive electrode lead) is arranged to correspond to the uppermost surface (or the lowermost surface) of the first electrode plate 341 (e.g., a positive electrode plate, a positive electrode layer, or a positive electrode film) from the first side 3411 to the second side 3412 of the uppermost surface (or the lowermost surface), the first electrode tab 320 (e.g., a first electrode lead, a positive electrode tab, or a positive electrode lead) is capable of supporting the battery cell 701. The first electrode tab 320 (e.g., a first electrode lead, a positive electrode tab, or a positive electrode lead) is capable of preventing the bent battery cell 701 from being restored (e.g., unfolded) to its original shape so that the bent shape can be maintained.

According to an embodiment, the second electrode tab 330 (e.g., a second electrode lead, a negative electrode tab, or a negative electrode lead) may be arranged on the lowermost surface of the second electrode plate 342 (e.g., a negative electrode plate, a negative electrode layer, or a negative electrode film) to correspond to the length of the battery cell 301. For example, the second electrode tab 330 (e.g., a second electrode lead, a negative electrode tab, or a negative electrode lead) may be arranged above or below the lowermost surface of the second electrode plate 342 (e.g., a negative electrode plate, a negative electrode layer, or a negative electrode film).

According to an embodiment, a portion of the second electrode tab 330 may be disposed to overlap the second electrode plate 342, and the portion 332 that does not overlap the second electrode plate 342 may be disposed to be exposed outside the housing 310. The second electrode tab 330 may be electrically bonded (e.g., welded) at one or more points (e.g., multiple points 335) in the area where it is disposed to overlap the second electrode plate 342.

According to an embodiment, the second electrode tab 330 (e.g., a second electrode lead, a negative electrode tab, or a negative electrode lead) may be electrically bonded (e.g., welded) to at least a portion (e.g., multiple points 335) of the second electrode plate 342 (e.g., a negative electrode plate, a negative electrode layer, or a negative electrode film).

For example, the second electrode tab 330 (e.g., a second electrode lead, a negative electrode tab, or a negative electrode lead) may be arranged on the uppermost surface of the second electrode plate 342 (e.g., a negative electrode plate, a negative electrode layer, or a negative electrode film) to correspond to the length of the battery cell 701.

According to an embodiment, the second electrode tab 330 (e.g., a second electrode lead, a negative electrode tab, or a negative electrode lead) may be arranged to correspond to the uppermost surface (or the lowermost surface) of the second electrode plate 342 (e.g., a negative electrode plate, a negative electrode layer, or a negative electrode film) from the first side 3421 to the second side 3422 of the uppermost surface (or the lowermost surface).

According to an embodiment, the second electrode tab 330 (e.g., a second electrode lead, a negative electrode tab, or a negative electrode lead) may be electrically bonded (e.g., welded) to the second electrode plate 342 (e.g., a positive electrode plate, a positive electrode layer, or a positive electrode film) at multiple points 335. The second electrode tab 330 (e.g., a second electrode lead, a negative electrode tab, or a negative electrode lead) may be electrically bonded (e.g., welded) to the uppermost surface of the second electrode plate 342 (e.g., a negative electrode plate, a negative electrode layer, or a negative electrode film).

According to an embodiment, with reference to the cross section of the battery cell 301 (e.g., the cross section taken along line B-B' in FIG. 7), the battery cell 301 may include a curved surface. For example, at least a portion of a stack surface for the first electrode plate 341 (e.g., a positive electrode plate, a positive electrode layer, or a positive electrode film), the second electrode plate 342 (e.g., a negative electrode plate, a negative electrode layer, or a negative electrode film), and the separator 343 (e.g., a separation plate or a separation layer) may have the shape of a curved surface.

According to an embodiment, the curve of the battery cell 301 may have a curvature radius R from 50 mm to 500 mm. Without being limited thereto, the curvature radius R of the curve of the battery cell 301 may be 50 mm or less to match the shape of an electronic device (e.g., the electronic device 210 or 220 of FIG. 2) to which the curved battery 300 is applied. In addition, the curvature radius R of the curve of the battery cell 301 may be 500 mm or more to match the shape of an electronic device (e.g., the electronic device 210 or 220 of FIG. 2) to which the curved battery 300 is applied.

According to an embodiment, since the second electrode tab 330 (e.g., a second electrode lead, a negative electrode tab, or a negative electrode lead) is arranged to correspond to the uppermost surface (or the lowermost surface) of the second electrode plate 342 (e.g., a negative electrode plate, a negative electrode layer, or a negative electrode film) from the first side 3421 to the second side 3422 of the uppermost surface (or the lowermost surface), the second electrode tab 330 (e.g., a second electrode lead, a negative electrode tab, or a negative electrode lead) is capable of supporting the battery cell 701. The second electrode tab 330 (e.g., a second electrode lead, a negative electrode tab, or a negative electrode lead) is capable of preventing the bent battery cell 301 from being restored (e.g., unfolded) to its original shape so that the bent shape can be maintained.

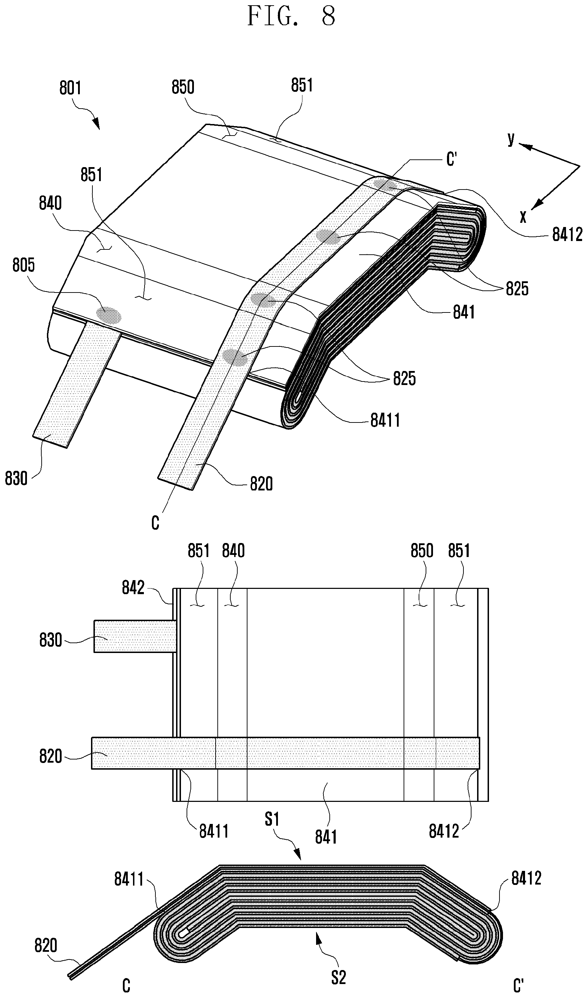

FIG. 8 is a view illustrating a bent battery cell.

When describing the battery cell 801 of FIG. 8, descriptions of configurations that are the same as or similar to those of the battery cell 301 of FIG. 6 and the battery cell 301 of FIG. 7 may be omitted.

Referring to FIG. 8, a curved battery (e.g., the curved battery 300 in FIGS. 3 and 4) according to an embodiment of the disclosure may include a battery cell 801 (e.g., a battery pouch) and a housing 310 (e.g., the housing 310 in FIGS. 3 and 4) (e.g., a case).

According to an embodiment, the housing 310 may include an inner space having the curved surface shapes (e.g., G1 and G2 in FIG. 4) corresponding to the shapes of surfaces (e.g., S1 and S2 in FIG. 4) (e.g., curved surface shapes) of the battery cell 801 (e.g., a battery pouch). The battery cell 801 may be disposed in the inner space of the housing 310, and the battery cell 801 may be sealed by the housing 310.

For example, the surface of the battery cell 801 may include a concave first surface S1 (e.g., the first surface S1 in FIG. 4) and a convex second surface S2 (e.g., the second surface S2 in FIG. 4). For example, the concave first surface S1 may be the bottom surface of the battery cell 801, and the convex second surface S2 may be the top surface of the battery cell 801. For example, the concave first surface S1 may be the top surface of the battery cell 801, and the convex second surface S2 may be the bottom surface of the battery cell 801.

According to an embodiment, the battery cell 801 may include a first electrode plate 841 (e.g., a positive electrode plate, a positive electrode layer, a positive electrode film), a second electrode plate 842 (e.g., the second electrode plate 342 in FIG. 4) (e.g., a negative electrode plate, a negative electrode layer, or a negative electrode film), a separator 343 (e.g., the separator 343 in FIG. 4) (e.g. a separation plate or a separation layer), a first electrode tab 820 (e.g., a first electrode lead, a positive electrode tab, or a positive electrode lead), and a second electrode tab 830 (e.g., a second electrode lead, a negative electrode tab, or a negative electrode lead).

For example, the first electrode tab 820 (e.g., a first electrode lead, a positive electrode tab, or a positive electrode lead) may include not only a portion that overlaps the first electrode plate 841 (e.g., a positive electrode plate, a positive electrode layer, or a positive electrode film), but also a portion that is disposed outside the housing 310 (e.g., the portion 322 of the first electrode tab 320 in FIG. 3 that is disposed outside the housing 310).

For example, the second electrode tab 830 (e.g., a second electrode lead, a negative electrode tab, or a negative electrode lead) may include not only a portion that overlaps the second electrode plate 842 (e.g., a negative electrode plate, a negative electrode layer, or a negative electrode film), but also a portion that is disposed outside the housing 310 (e.g., the portion 332 of the second electrode tab 330 in FIG. 3 that is disposed outside the housing 310).

According to an embodiment, the first electrode tab 820 (e.g., a first electrode lead, a positive electrode tab, or a positive electrode lead) and the second electrode tab 830 (e.g., a second electrode lead, a negative electrode tab, or a negative electrode lead) may contain a conductive metallic material.

According to an embodiment, the separator (e.g., the separator 343 in FIG. 4) (e.g., a separation plate or a separation layer) may be disposed between the first electrode plate 841 (e.g., a positive electrode plate, a positive electrode layer, or a positive electrode film) and the second electrode plate 842 (e.g., a negative electrode plate, a negative electrode layer, or a negative electrode film) to electrically separate the first electrode plate 841 (e.g., a positive electrode plate, a positive electrode layer, or a positive electrode film) and the second electrode plate 842 (e.g., a negative electrode plate, a negative electrode layer, or a negative electrode film).

For example, the first electrode plate 841 (e.g., a positive electrode plate, a positive electrode layer, or a positive electrode film) and the second electrode plate 842 (e.g., a negative electrode plate, a negative electrode layer, or a negative electrode film) may have different electrical polarities.

According to an embodiment, the battery cell 801 may be wound in the form of a jelly-roll after sequentially stacking the first electrode plate 841 (e.g., a positive electrode plate, a positive electrode layer, or a positive electrode film), the separator (e.g., the separator 343 in FIG. 4) (e.g., a separation plate or a separation layer), and the second electrode plate 842 (e.g., a negative electrode plate, a negative electrode layer, or a negative electrode film).

According to an embodiment, the battery cell 801 may be formed by sequentially and repeatedly stacking the first electrode plate 841 (e.g., a positive electrode plate, a positive electrode layer, or a positive electrode film), the separator (e.g., the separator 343 in FIG. 4) (e.g., a separation plate or a separation layer), and the second electrode plate 842 (e.g., a negative electrode plate, a negative electrode layer, or a negative electrode film).

For example, the separator (e.g., the separator 343 in FIG. 4) (e.g., a separation plate or a separation layer) may be formed by forming a non-conductive porous layer on the first electrode plate 841 (e.g., a positive electrode plate, a positive electrode layer, or a positive electrode film) or the second electrode plate 842 (e.g., a negative electrode plate, a negative electrode layer, or a negative electrode film).

For example, the separator (e.g., the separator 343) (e.g., a separation plate or a separation layer) may be provided to electrically separate the first electrode plate 841 (e.g., a positive electrode plate, a positive electrode layer, or a positive electrode film) and the second electrode plate 112.

According to an embodiment, the first electrode tab 820 (e.g., a first electrode lead, a positive electrode tab, or a positive electrode lead) and the second electrode tab 830 (e.g., a second electrode lead, a negative electrode tab, or a negative electrode lead) may be disposed in the longitudinal direction of the battery cell 801.

For example, at least a portion of the first electrode tab 820 (e.g., a first electrode lead, a positive electrode tab, or a positive electrode lead) (e.g., the portion 322 of the first electrode tab 320 in FIG. 3 that is exposed outside the housing 310) may be exposed outside the housing 310 such that the battery cell 801 can be electrically connected to external electronic components. At least a portion of the second electrode tab 830 (e.g., the portion 332 of the second electrode tab 330 of FIG. 3 that is disposed outside the housing 310) may be exposed outside the housing 310.

According to an embodiment, the first electrode tab 820 (e.g., a first electrode lead, a positive electrode tab, or a positive electrode lead) may be arranged above or below the uppermost surface of the first electrode plate 841 (e.g., a positive electrode plate, a positive electrode layer, or a positive electrode film).

According to an embodiment, the first electrode tab 820 (e.g., a first electrode lead, a positive electrode tab, or a positive electrode lead) may be arranged above or below the lowermost surface of the first electrode plate 841 (e.g., a positive electrode plate, a positive electrode layer, or a positive electrode film).

According to an embodiment, the first electrode tab 820 (e.g., a first electrode lead, a positive electrode tab, or a positive electrode lead) may be electrically connected to the first electrode plate 841 (e.g., a positive electrode plate, a positive electrode layer, or a positive electrode film). For example, the first electrode tab 820 (e.g., a first electrode lead, a positive electrode tab, or a positive electrode lead) may be electrically bonded (e.g., joined) to the first uncoated portion of the first electrode plate 841 (e.g., a positive electrode plate, a positive electrode layer, or a positive electrode film) by welding.

According to an embodiment, the second electrode tab 830 (e.g., a second electrode lead, a negative electrode tab, or a negative electrode lead) may be arranged above or below the uppermost surface of the second electrode plate 842 (e.g., a negative electrode plate, a negative electrode layer, or a negative electrode film).

According to an embodiment, the second electrode tab 830 (e.g., a second electrode lead, a negative electrode tab, or a negative electrode lead) may be arranged above or below the lowermost surface of the second electrode plate 842 (e.g., a negative electrode plate, a negative electrode layer, or a negative electrode film).

According to an embodiment, the second electrode tab 830 (e.g., a second electrode lead, a negative electrode tab, or a negative electrode lead) may be electrically connected to the second electrode plate 842 (e.g., a negative electrode plate, a negative electrode layer, or a negative electrode film). For example, the second electrode tab 830 (e.g., a second electrode lead, a negative electrode tab, or a negative electrode lead) may be electrically bonded (e.g., joined) to the second uncoated portion of the second electrode plate 842 (e.g., a negative electrode plate, a negative electrode layer, or a negative electrode film) by welding.

In the manufacturing process of the battery cell 801, a non-bent battery cell (e.g., the battery cell 301 in FIG. 5) may be placed on a mold (e.g., a jig) having a predetermined sloped surface (or a predetermined shape), and then the battery cell 801 may be pressed to form a bent battery cell (e.g., the battery cell 801 in FIG. 8).

According to an embodiment, with reference to the cross section of the battery cell 801 (e.g., the cross section taken along line C-C' in FIG. 8), the battery cell 801 may include a sloped surface. For example, a stack surface for the first electrode plate 841 (e.g., a positive electrode plate, a positive electrode layer, or a positive electrode film), the second electrode plate 842 (e.g., a negative electrode plate, a negative electrode layer, or a negative electrode film), and the separator (e.g., the separator 343) (e.g., a separation plate or a separation layer) may have a sloped surface shape.

For example, in the longitudinal direction of the battery cell 801, multiple portions may be bent by predetermined angles 840 and 850 to form multiple sloped surfaces 851.

The bent battery cell 801 may have the characteristic of being restored (e.g., unfolded) to its original plate shape over time by the restoring force of the first electrode plate 841 (e.g., a positive electrode plate, a positive electrode layer, or a positive electrode film), the second electrode plate 842 (e.g., a negative electrode plate, a negative electrode layer, or a negative electrode film), and the separator (e.g., the separator 343 in FIG. 4) (e.g., a separation plate or a separation layer).

According to an embodiment, in the curved battery 300 according to an embodiment of the disclosure, in order to prevent the bent shape of the battery cell 801 from being deformed (e.g., changed), at least one of the first electrode tab 820 (e.g., a first electrode lead, a positive electrode tab, or a positive electrode lead) and the second electrode tab 830 (e.g., a second electrode lead, a negative electrode tab, or a negative electrode lead) may be arranged to correspond to the length of the battery cell 801.

According to an embodiment, the first electrode tab 820 (e.g., a first electrode lead, a positive electrode tab, or a positive electrode lead) may be electrically bonded (e.g., welded) to at least a portion of the first electrode plate 841 (e.g., a positive electrode plate, a positive electrode layer, or a positive electrode film).

For example, the first electrode tab 820 (e.g., a first electrode lead, a positive electrode tab, or a positive electrode lead) may be arranged on the uppermost surface of the first electrode plate 841 (e.g., a positive electrode plate, a positive electrode layer, or a positive electrode film) to correspond to the length of the battery cell 801. For example, the first electrode tab 820 (e.g., a first electrode lead, a positive electrode tab, or a positive electrode lead) may be arranged on the lowermost surface of the first electrode plate 841 (e.g., a positive electrode plate, a positive electrode layer, or a positive electrode film) to correspond to the length of the battery cell 801.

According to an embodiment, the first electrode tab 820 (e.g., a first electrode lead, a positive electrode tab, or a positive electrode lead) may be arranged to correspond to the uppermost surface (or the lowermost surface) of the first electrode plate 841 (e.g., a positive electrode plate, a positive electrode layer, or a positive electrode film) from the first side 8411 to the second side 8412 of the uppermost surface (or the lowermost surface).

For example, the first electrode tab 820 (e.g., a first electrode lead, a positive electrode tab, or a positive electrode lead) may be electrically bonded (e.g., welded) to the first electrode plate 841 (e.g., a positive electrode plate, a positive electrode layer, or a positive electrode film) at multiple points 825. For example, the first electrode tab 820 (e.g., a first electrode lead, a positive electrode tab, or a positive electrode lead) may be electrically bonded (e.g., welded) to the uppermost surface of the first electrode plate 841 (e.g., a positive electrode plate, a positive electrode layer, or a positive electrode film). For example, the first electrode tab 820 (e.g., a first electrode lead, a positive electrode tab, or a positive electrode lead) may be electrically bonded (e.g., welded) to the lowermost surface of the first electrode plate 841 (e.g., a positive electrode plate, a positive electrode layer, or a positive electrode film).

According to an embodiment, the second electrode tab 830 (e.g., a second electrode lead, a negative electrode tab, or a negative electrode lead) may be electrically bonded (e.g., welded) to at least a portion of the second electrode plate 842 (e.g., a negative electrode plate, a negative electrode layer, or a negative electrode film).

For example, the second electrode tab 830 (e.g., a second electrode lead, a negative electrode tab, or a negative electrode lead) may be arranged on the uppermost surface of the second electrode plate 842 (e.g., a negative electrode plate, a negative electrode layer, or a negative electrode film) at one side portion of the battery cell 801. For example, the second electrode tab 830 (e.g., a second electrode lead, a negative electrode tab, or a negative electrode lead) may be arranged on the lowermost surface of the second electrode plate 842 (e.g., a negative electrode plate, a negative electrode layer, or a negative electrode film) in one side portion of the battery cell 801.

For example, the second electrode tab 830 (e.g., a second electrode lead, a negative electrode tab, or a negative electrode lead) may be electrically bonded (e.g., welded) to the second electrode plate 842 (e.g., a negative electrode plate, a negative electrode layer, or a negative electrode film) in one side portion 805 of the battery cell 801. For example, the second electrode tab 830 (e.g., a second electrode lead, a negative electrode tab, or a negative electrode lead) may be electrically bonded (e.g., welded) to the uppermost surface of the second electrode plate 842 (e.g., a negative electrode plate, a negative electrode layer, or a negative electrode film). For example, the second electrode tab 830 (e.g., a second electrode lead, a negative electrode tab, or a negative electrode lead) may be electrically bonded (e.g., welded) to the lowermost surface of the second electrode plate 842 (e.g., a negative electrode plate, a negative electrode layer, or a negative electrode film).

Since the first electrode tab 820 (e.g., a first electrode lead, a positive electrode tab, or a positive electrode lead) is arranged to correspond to the uppermost surface (or the lowermost surface) of the first electrode plate 841 (e.g., a positive electrode plate, a positive electrode layer, or a positive electrode film) from the first side 8411 to the second side 8412, the first electrode tab 820 (e.g., a first electrode lead, a positive electrode tab, or a positive electrode lead) is capable of supporting the battery cell 801. The first electrode tab 820 (e.g., a first electrode lead, a positive electrode tab, or a positive electrode lead) is capable of preventing the bent battery cell 801 from being restored (e.g., unfolded) to its original shape so that the bent shape can be maintained.

In the description made with reference to FIG. 8, it has been described that the first electrode tab 820 (e.g., a first electrode lead, a positive electrode tab, or a positive electrode lead) supports the battery cell 801, but the disclosure is not limited thereto. The second electrode tab 830 (e.g., a second electrode lead, a negative electrode tab, or a negative electrode lead) may extend in length to support the battery cell 801.

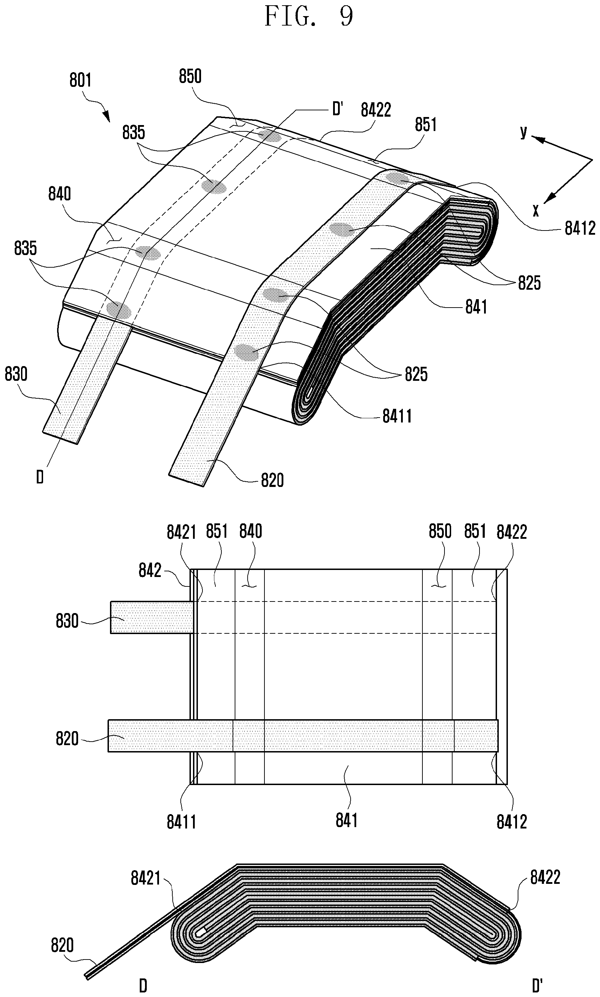

FIG. 9 is a view illustrating a bent battery cell.

When describing the battery cell 801 of FIG. 9, descriptions of configurations that are the same as or similar to those of the battery cell 301 of FIG. 6 and the battery cell 301 of FIG. 7 may be omitted.

Referring to FIG. 9, with reference to the cross section of the battery cell 801 (e.g., the cross section taken along line D-D' in FIG. 9), the battery cell 801 may include a sloped surface. For example, a stack surface for the first electrode plate 841 (e.g., a positive electrode plate, a positive electrode layer, or a positive electrode film), the second electrode plate 842 (e.g., a negative electrode plate, a negative electrode layer, or a negative electrode film), and the separator (e.g., the separator 343 in FIG. 4) (e.g., a separation plate or a separation layer) may have a sloped surface shape.

For example, in the longitudinal direction of the battery cell 801, multiple portions may be bent by predetermined angles 840 and 850 to form multiple sloped surfaces 851.

According to an embodiment of the disclosure, in the curved battery (e.g., the curved battery 300 in FIGS. 3 and 4), in order to prevent the bent shape of the battery cell 901 (e.g., a battery pouch) from being deformed (e.g., changed), the first electrode tab 820 (e.g., a first electrode lead, a positive electrode tab, or a positive electrode lead) and the second electrode tab 830 (e.g., a second electrode lead, a negative electrode tab, or a negative electrode lead) may be arranged to correspond to the length of the battery cell 901.

For example, the first electrode tab 820 (e.g., a first electrode lead, a positive electrode tab, or a positive electrode lead) may include not only a portion that overlaps the first electrode plate 841 (e.g., a positive electrode plate, a positive electrode layer, or a positive electrode film), but also a portion that is disposed outside the housing 310 (e.g., the portion 322 of the first electrode tab 320 in FIG. 3 that is disposed outside).

For example, the second electrode tab 830 (e.g., a second electrode lead, a negative electrode tab, or a negative electrode lead) may include not only a portion that overlaps the second electrode plate 842 (e.g., a negative electrode plate, a negative electrode layer, or a negative electrode film), but also a portion that is disposed outside the housing (e.g., the housing 310 in FIG. 4) (e.g., the portion 332 of the second electrode tab 330 in FIG. 3 that is disposed outside).

According to an embodiment, the first electrode tab 820 (e.g., a first electrode lead, a positive electrode tab, or a positive electrode lead) may be electrically bonded (e.g., welded) to at least a portion of the first electrode plate 841 (e.g., a positive electrode plate, a positive electrode layer, or a positive electrode film).

For example, the first electrode tab 820 (e.g., a first electrode lead, a positive electrode tab, or a positive electrode lead) may be arranged on the uppermost surface of the first electrode plate 841 (e.g., a positive electrode plate, a positive electrode layer, or a positive electrode film) to correspond to the length of the battery cell 901. For example, the first electrode tab 820 (e.g., a first electrode lead, a positive electrode tab, or a positive electrode lead) may be arranged on the lowermost surface of the first electrode plate 841 (e.g., a positive electrode plate, a positive electrode layer, or a positive electrode film) to correspond to the length of the battery cell 901.

According to an embodiment, the first electrode tab 820 (e.g., a first electrode lead, a positive electrode tab, or a positive electrode lead) may be arranged to correspond to the uppermost surface (or the lowermost surface) of the first electrode plate 841 (e.g., a positive electrode plate, a positive electrode layer, or a positive electrode film) from the first side 8411 to the second side 8412 of the uppermost surface (or the lowermost surface).

For example, the first electrode tab 820 (e.g., a first electrode lead, a positive electrode tab, or a positive electrode lead) may be electrically bonded (e.g., welded) to the first electrode plate 841 (e.g., a positive electrode plate, a positive electrode layer, or a positive electrode film) at multiple points 825. For example, the first electrode tab 820 (e.g., a first electrode lead, a positive electrode tab, or a positive electrode lead) may be electrically bonded (e.g., welded) to the uppermost surface of the first electrode plate 841 (e.g., a positive electrode plate, a positive electrode layer, or a positive electrode film). For example, the first electrode tab 820 (e.g., a first electrode lead, a positive electrode tab, or a positive electrode lead) may be electrically bonded (e.g., welded) to the lowermost surface of the first electrode plate 841 (e.g., a positive electrode plate, a positive electrode layer, or a positive electrode film).

Since the first electrode tab 820 (e.g., a first electrode lead, a positive electrode tab, or a positive electrode lead) is arranged to correspond to the uppermost surface (or the lowermost surface) of the first electrode plate 841 (e.g., a positive electrode plate, a positive electrode layer, or a positive electrode film) from the first side 8411 to the second side 8412, the first electrode tab 820 (e.g., a first electrode lead, a positive electrode tab, or a positive electrode lead) is capable of supporting the battery cell 901. The first electrode tab 820 (e.g., a first electrode lead, a positive electrode tab, or a positive electrode lead) is capable of preventing the bent battery cell 901 from being restored (e.g., unfolded) to its original shape so that the bent shape can be maintained.

According to an embodiment, the second electrode tab 830 (e.g., a second electrode lead, a negative electrode tab, or a negative electrode lead) may be electrically bonded (e.g., welded) to at least a portion of the second electrode plate 842 (e.g., a negative electrode plate, a negative electrode layer, or a negative electrode film).

For example, the second electrode tab 830 (e.g., a second electrode lead, a negative electrode tab, or a negative electrode lead) may be arranged on the uppermost surface of the second electrode plate 842 (e.g., a negative electrode plate, a negative electrode layer, or a negative electrode film) to correspond to the length of the battery cell 901. For example, the second electrode tab 830 (e.g., a second electrode lead, a negative electrode tab, or a negative electrode lead) may be arranged on the lowermost surface of the second electrode plate 842 (e.g., a negative electrode plate, a negative electrode layer, or a negative electrode film) to correspond to the length of the battery cell 901.

According to an embodiment, the second electrode tab 830 (e.g., a second electrode lead, a negative electrode tab, or a negative electrode lead) may be arranged to correspond to the uppermost surface (or the lowermost surface) of the second electrode plate 842 (e.g., a negative electrode plate, a negative electrode layer, or a negative electrode film) from the first side 8421 to the second side 8422 of the uppermost surface (or the lowermost surface).

For example, the second electrode tab 830 (e.g., a second electrode lead, a negative electrode tab, or a negative electrode lead) may be electrically bonded (e.g., welded) to the second electrode plate 842 (e.g., a positive electrode plate, a positive electrode layer, or a positive electrode film) at multiple points 835. The second electrode tab 830 (e.g., a second electrode lead, a negative electrode tab, or a negative electrode lead) may be electrically bonded (e.g., welded) to the uppermost surface of the second electrode plate 842 (e.g., a negative electrode plate, a negative electrode layer, or a negative electrode film).

For example, since the second electrode tab 830 (e.g., a second electrode lead, a negative electrode tab, or a negative electrode lead) is arranged to correspond to the uppermost surface (or the lowermost surface) of the second electrode plate 842 (e.g., a negative electrode plate, a negative electrode layer, or a negative electrode film) from the first side 8421 to the second side 8422 of the uppermost surface (or the lowermost surface), the second electrode tab 830 (e.g., a second electrode lead, a negative electrode tab, or a negative electrode lead) is capable of supporting the battery cell 901. The second electrode tab 830 (e.g., a second electrode lead, a negative electrode tab, or a negative electrode lead) is capable of preventing the bent battery cell 901 from being restored (e.g., unfolded) to its original shape so that the bent shape can be maintained.

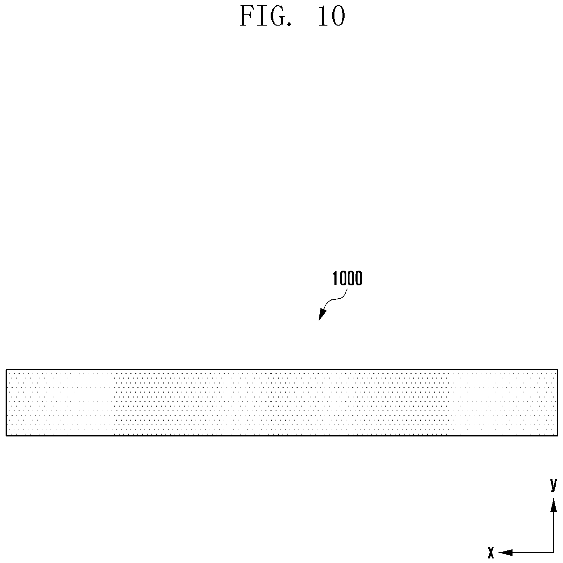

FIG. 10 is a view illustrating the shape of an electrode tab of a curved battery according to an embodiment of the disclosure.

Referring to FIG. 10, electrode tabs 1000 (e.g., the first electrode tab 320 and the second electrode tab 320 in FIGS. 6 and 7 and the first electrode tab 820 and the second electrode tab 830 in FIGS. 8 and 9) of a curved battery (e.g., the curved battery 300 in FIGS. 3 and 4) according to an embodiment of the disclosure may be formed in a bar type extending in the longitudinal direction of a battery cell (e.g., the battery cell 301 in FIG. 6, the battery cell 701 in FIG. 7, the battery cell 801 in FIG. 8, or the battery cell 901 in FIG. 9).

Without being limited thereto, the electrode tabs 1000 of the curved battery (e.g., the curved battery 300 in FIGS. 3 and 4) according to an embodiment of the disclosure may be formed in a bar type including a lattice pattern.

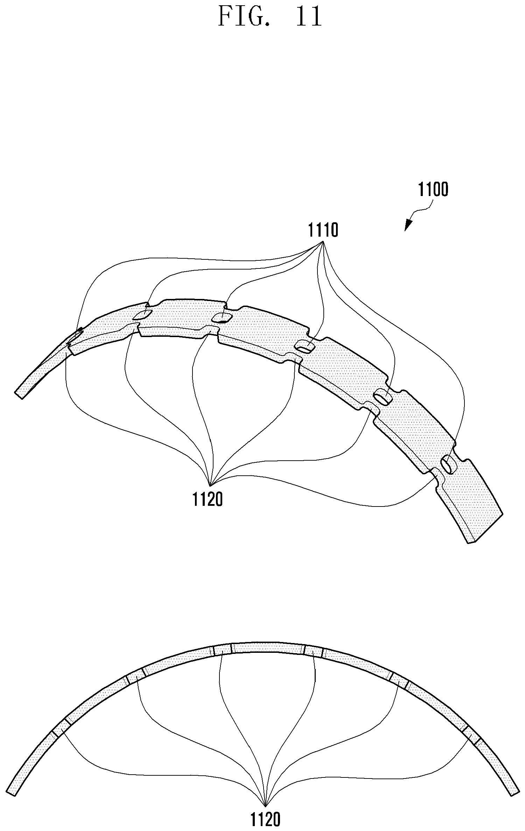

FIG. 11 is a view illustrating the shape of an electrode tab of a curved battery according to an embodiment of the disclosure.

Referring to FIG. 11, electrode tabs 1100 (e.g., the first electrode tab 320 and the second electrode tab 320 in FIGS. 6 and 7 and the first electrode tab 820 and the second electrode tab 830 in FIGS. 8 and 9) of a curved battery (e.g., the curved battery 300 in FIGS. 3 and 4) according to an embodiment of the disclosure may be formed in a bar type extending in the longitudinal direction of a battery cell (e.g., the battery cell 301 in FIG. 6, the battery cell 701 in FIG. 7, the battery cell 801 in FIG. 8, or the battery cell 901 in FIG. 9).

According to an embodiment, in order to allow the electrode tabs 1100 to be bent to match the bent shape of a battery cell (e.g., the battery cell 301 in FIGS. 6 and 7 or the battery cell 801 in FIGS. 8 and 9), the electrode tabs may include multiple holes 1110 and/or notches 1120. At each of a plurality of positions (in this example, those positions are evenly spaced apart) along a length of the electrode tab there is provided a respective hole 1110 through the tab and a respective pair of notches 1120 in the sides of the tab, each notch 1120 extending in towards the respective hole 1110. The notches and holes reduce the cross sectional area of the tab material at each of the plurality of positions.

For example, the electrode tabs 1100 may include multiples holes 1110 arranged at predetermined intervals. The holes 1110 may be formed to penetrate the electrode tabs 1100 through the top and bottom surfaces.

For example, the electrode tabs 1100 may include multiples notches 1120 arranged at predetermined intervals. The multiple notches 1120 may be formed by removing portions of side surfaces of the electrode tabs 1100.

For example, multiple notches 1120 may be formed to correspond to the multiple holes 1110.

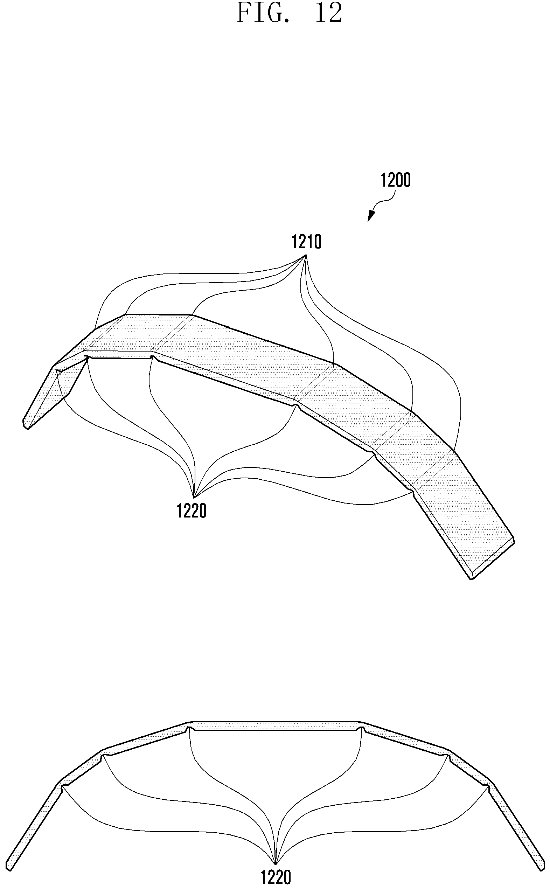

FIG. 12 is a view illustrating the shape of an electrode tab of a curved battery according to an embodiment of the disclosure.

Referring to FIG. 12, electrode tabs 1200 (e.g., the first electrode tab 320 and the second electrode tab 320 in FIGS. 6 and 7 and the first electrode tab 820 and the second electrode tab 830 in FIGS. 8 and 9) of a curved battery (e.g., the curved battery 300 in FIGS. 3 and 4) according to an embodiment of the disclosure may be formed in a bar type extending in the longitudinal direction of a battery cell (e.g., the battery 301 cell in FIG. 6, the battery cell 701 in FIG. 7, the battery cell 801 in FIG. 8, or the battery cell 901 in FIG. 9).

According to an embodiment, in order to allow the electrode tabs 1200 to be bent to match the bent shape of a battery cell (e.g., the battery cell 301 in FIGS. 6 and 7 or the battery cell 801 in FIGS. 8 and 9), the electrode tabs may include multiple grooves 1220. In this example, each groove extends completely across a width of the electrode tab, but other embodiments may comprise grooves extending partially across the width of the electrode tab. Each groove reduces the cross sectional area of the electrode tab at its respective position. In this example, this reduction in cross-sectional area may be performed pre-bending. Then, when bending is performed, the stress at each position corresponding to a groove is greater than at positions longitudinally between the grooves, and can result in greater strain of the electrode tab material. The amount of bending (or the bending force) together with the material of the electrode tab may be arranged such that the strain of the tab material at the grove positions exceeds the tab material's elastic limit, becomes inelastic, and work-hardens the tab material at the locations of the grooves. This work hardening may result in the electrode tab retaining, at least partially, its bent shape after the bending force is removed, and thus the bent tab may also support the battery cell in its corresponding bent shape, against the action of any resilience of the battery-cell's other components.

For example, multiple grooves 1220 may be provided on the bottom surfaces of the electrode tabs 1200 at predetermined intervals. Without being limited thereto, multiple grooves 1220 may be provided on the top surfaces of the electrode tabs 1200 at predetermined intervals.

For example, the multiple grooves 1220 may be arranged to correspond to portions 1210 where the electrode tabs 1200 are bent.

For example, the electrode tabs 1200 may further include multiple notches (e.g., the notches 1120 in FIG. 11) arranged at predetermined intervals. The multiple notches 1120 may be formed by removing portions of side surfaces of the electrode tabs 1100.

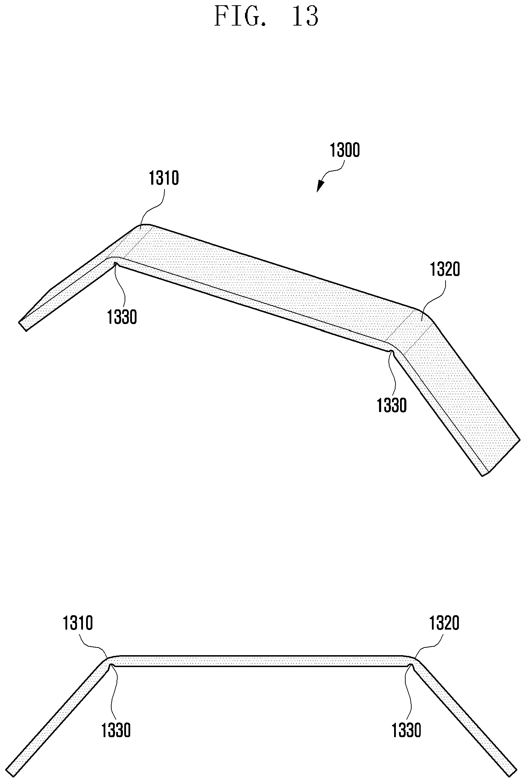

FIG. 13 is a view illustrating the shape of an electrode tab of a curved battery according to an embodiment of the disclosure.

Referring to FIG. 13, electrode tabs 1300 (e.g., the first electrode tab 320 and the second electrode tab 320 in FIGS. 6 and 7 and the first electrode tab 820 and the second electrode tab 830 in FIGS. 8 and 9) of a curved battery (e.g., the curved battery 300 in FIGS. 3 and 4) according to an embodiment of the disclosure may be formed in a bar type extending in the longitudinal direction of a battery cell (e.g., the battery cell 301 in FIG. 6, the battery cell 701 in FIG. 7, the battery cell 801 in FIG. 8, or the battery cell 901 in FIG. 9).

According to an embodiment, in order to allow the electrode tabs 1300 to be bent to match the bent shape of a battery cell (e.g., the battery cell 301 in FIGS. 6 and 7 or the battery cell 801 in FIGS. 8 and 9), the electrode tabs may include multiple notches 1330.

For example, multiple notches 1330 may be provided on the bottom surfaces of the electrode tabs 1300 at predetermined intervals. Without being limited thereto, multiple notches 1330 may be provided on the top surfaces of the electrode tabs 1300 at predetermined intervals.

For example, the multiple notches 1330 may be arranged to correspond to portions 1310 and 1320 where the electrode tabs 1300 are bent.

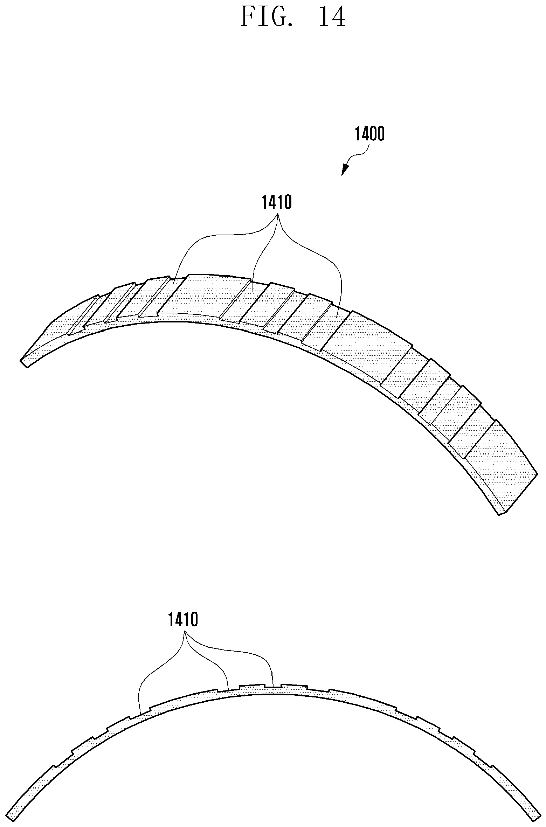

FIG. 14 is a view illustrating the shape of an electrode tab of a curved battery according to an embodiment of the disclosure.

Referring to FIG. 14, electrode tabs 1400 (e.g., the first electrode tab 320 and the second electrode tab 320 in FIGS. 6 and 7 and the first electrode tab 820 and the second electrode tab 830 in FIGS. 8 and 9) of a curved battery (e.g., the curved battery 300 in FIGS. 3 and 4) according to an embodiment of the disclosure may be formed in a bar type extending in the longitudinal direction of a battery cell (e.g., the battery cell 301 in FIG. 6, the battery cell 701 in FIG. 7, the battery cell 801 in FIG. 8, or the battery cell 901 in FIG. 9).

According to an embodiment, in order to allow the electrode tabs 1400 to be bent to match the bent shape of a battery cell (e.g., the battery cell 301 in FIGS. 6 and 7 or the battery cell 801 in FIGS. 8 and 9), the electrode tabs may include multiple grooves 1410.

For example, multiple grooves 1410 may be provided on the top surfaces of the electrode tabs 1400 at predetermined intervals. Without being limited thereto, multiple grooves 1410 may be provided on the bottom surfaces of the electrode tabs 1400 at predetermined intervals.

For example, the multiple grooves 1410 may be arranged to correspond to portions 1210 where the electrode tabs 1400 are bent.

For example, the plurality of grooves 1410 may be provided at equal intervals.

For example, the intervals of the multiple grooves 1410 may be different.

For example, the areas of the multiple grooves 1410 may be equal to each other.

For example, the areas of the multiple grooves 1410 may be different from each other.

For example, the electrode tabs 1400 may further include multiple notches (e.g., the notches 1120 in FIG. 11) arranged at predetermined intervals. The multiple notches 1120 may be formed by removing portions of side surfaces of the electrode tabs 1400.

A curved battery (e.g., the curved battery 300 in FIGS. 3 and 4) according to an embodiment of the disclosure may include a battery cell (e.g., the battery cell 301 in FIG. 6 or the battery cell 701 in FIG. 7) having a curved cross section, and a housing (e.g., the housing 310 in FIGS. 3 and 4) disposed outside the battery cell 301 or 701.

The battery cell 301 or 701 may include a positive electrode plate (e.g., the positive electrode plate 341 in FIG. 4), a negative electrode plate (e.g., the negative electrode plate 342 in FIG. 4), a separator (e.g., the separator 343 in FIG. 4) disposed between the positive electrode plate 341 and the negative electrode plate 342, a first electrode tab (e.g., the first electrode tab 320 in FIGS. 6 and 7) electrically connected to at least a portion of the positive electrode plate 341, and a second electrode tab (e.g., the second electrode tab 330 in FIGS. 6 and 7) electrically connected to at least a portion of the negative electrode plate 342. The positive electrode plate 341, the negative electrode plate 342, and the separator 343 may be wound and disposed. At least one of the first electrode tab 320 and the second electrode tab 330 may overlap at least a portion of the positive electrode plate 341 or the negative electrode plate 342.

According to an embodiment, at least a portion of a stack surface (or, in other words, of an outer surface of the wound or rolled configuration, assembly, or arrangement) for the positive electrode plate 341, the negative electrode plate 342, and the separator 343 may include a curved surface.

According to an embodiment, the stack surface for the positive electrode plate 341, the negative electrode plate 342, and the separator 343 may include a sloped surface.

According to an embodiment, the first electrode tab 320 may be arranged to correspond to the uppermost surface (or the lowermost surface) of the positive electrode plate 341 from a first side (e.g., the first side 3411 in FIGS. 6 and 7) to a second side (e.g., the second side 3412 in FIGS. 6 and 7) of the uppermost surface (or the lowermost surface).

According to an embodiment, the first electrode tab 320 may be electrically bonded to the positive electrode plate at multiple points.

According to an embodiment, the second electrode tab 330 may be electrically bonded on the first side (e.g., the first side 3421 in FIG. 7) of the uppermost surface (or the lowermost surface) of the negative electrode plate 342.

According to an embodiment, the second electrode tab 330 may be arranged to correspond to the uppermost surface (or the lowermost surface) of the negative electrode plate 342 from the first side 3421 to a second side (e.g., the second side 3422 in FIG. 7) of the uppermost surface (or the lowermost surface).

According to an embodiment, the second electrode tab 330 may be electrically bonded to the negative electrode plate 342 at multiple points 335.

According to an embodiment, the first electrode tab 320 may be electrically bonded on the first side 3411 of the uppermost surface (or the lowermost surface) of the positive electrode plate 341.

According to an embodiment, the first electrode tab 320 may be arranged to correspond to the uppermost surface (or the lowermost surface) of the positive electrode plate 341 from the first side 3411 to the second side 3412 of the uppermost surface (or the lowermost surface). The second electrode tab 330 may be arranged to correspond to the uppermost surface (or the lowermost surface) of the negative electrode plate 342 from the first side 3421 to the second side 3422 of the uppermost surface (or the lowermost surface). The first electrode tab 320 may be electrically bonded to the positive electrode plate 341 at multiple points. The second electrode tab 330 may be electrically bonded to the negative electrode plate 342 at multiple points 335.

According to an embodiment, the first electrode tab 320 or the second electrode tab 330 may include holes 1110 arranged at predetermined intervals.

According to an embodiment, the first electrode tab 320 or the second electrode tab 330 may include grooves 1410 arranged at predetermined intervals.

According to an embodiment, the first electrode tab 320 or the second electrode tab 330 may include notches 1220 arranged at predetermined intervals.

According to an embodiment, the curve of the battery cells 301 and 701 may have a curvature radius R from 50 mm to 500 mm.

An electronic device 210 or 200 according to an embodiment of the disclosure may include a flexible display, a display driver integrated circuit (IC) configured to drive the flexible display, a processor 120 configured to control the operation of the display driver IC, memory 130 operatively connected to the processor, and a battery 300 configured to supply power to the display driver IC and the processor 120. The battery 300 may include a battery cell 301 or 701 having a curved cross section, and a housing 310 disposed outside the battery cell. The battery cell 301 or 701 may include a positive electrode plate 341, a negative electrode plate 342, a separator 343 disposed between the positive electrode plate 341 and the negative electrode plate 342, a first electrode tab 320 electrically connected to at least a portion of the positive electrode plate 341, and a second electrode tab 330 electrically connected to at least a portion of the negative electrode plate 342. The positive electrode plate 341, the negative electrode plate 342, and the separator 343 may be wound and disposed. At least one of the first electrode tab 320 and the second electrode tab 330 may be arranged to correspond to the length of the battery cell 301 or 701.

According to an embodiment, at least a portion of a stack surface for the positive electrode plate 341, the negative electrode plate 342, and the separator 343 may include a curved surface.

According to an embodiment, the stack surface for the positive electrode plate 341, the negative electrode plate 342, and the separator 343 may include a sloped surface.

According to an embodiment, the first electrode tab 320 may be arranged to correspond to the uppermost surface (or the lowermost surface) of the positive electrode plate 341 from the first side 3411 to the second side 3412 of the uppermost surface (or the lowermost surface). The first electrode tab 320 may be electrically bonded to the positive electrode plate at multiple points. The second electrode tab 330 may be electrically bonded on the first side 3421 of the uppermost surface (or the lowermost surface) of the negative electrode plate 342.

According to an embodiment, the second electrode tab 330 may be arranged to correspond to the uppermost surface (or the lowermost surface) of the negative electrode plate 342 from the first side 3421 to the second side 3422 of the uppermost surface (or the lowermost surface). The second electrode tab 330 may be electrically bonded to the negative electrode plate 342 at multiple points 335. The first electrode tab 320 may be electrically bonded on the first side 3411 of the uppermost surface (or the lowermost surface) of the positive electrode plate 341.

According to an embodiment, the first electrode tab 320 may be arranged to correspond to the uppermost surface (or the lowermost surface) of the positive electrode plate 341 from the first side 3411 to the second side 3412 of the uppermost surface (or the lowermost surface). The second electrode tab 330 may be arranged to correspond to the uppermost surface (or the lowermost surface) of the negative electrode plate 342 from the first side 3421 to the second side 3422 of the uppermost surface (or the lowermost surface). The first electrode tab 320 may be electrically bonded to the positive electrode plate 341 at multiple points. The second electrode tab 330 may be electrically bonded to the negative electrode plate 342 at multiple points 335.

According to an embodiment, the first electrode tab 320 or the second electrode tab 330 may include holes 1110 arranged at predetermined intervals. The first electrode tab 320 or the second electrode tab 330 may include notches 1220 arranged at predetermined intervals.

According to an embodiment, the first electrode tab 320 or the second electrode tab 330 may include grooves 1410 arranged at predetermined intervals. The first electrode tab 320 or the second electrode tab 330 may include notches 1220 arranged at predetermined intervals.

The curved battery 300 according to an embodiment of the disclosure is capable of maintaining a bent shape.

**In** the curved battery according to an embodiment of the disclosure, at least one of the first electrode tab 320 or 820 and the second electrode tab 320 or 830 is configured to correspond to the length of the battery cell 301, 701, 801, or 901. Thus, it is possible to prevent the bent battery cell 301, 701, 801, or 901 from being restored (e.g., unfolded) to its original shape and to make the bent battery cell maintain the bent shape.

A curved (or non-flat, non-planar, arcuate, or bent) battery according to an embodiment of the disclosure may include a battery cell having a curved (or non-flat, non-planar, arcuate, or bent) shape, and at least one support member arranged to support said battery cell to maintain said shape.

According to an embodiment, the at least one support member may be an electrode tab electrically connected to a component of the battery cell (e.g. to a positive or negative electrode plate of the battery cell).

According to an embodiment, the at least one support member may have a curved (or non-flat, non-planar, arcuate, or bent) shape, for example corresponding to the shape of the battery cell.

According to an embodiment, the at least one support member may comprise a ductile material (for example a metal).

According to an embodiment, at least a portion of the at least one support member may be work-hardened (for example by bending).

According to an embodiment, at least one support member comprises a plurality of work-hardened portions, spaced apart from each other along a length of the support member.

According to an embodiment, the, or each, work-hardened portion of the at least one support member may comprise at least one of a notch, groove, hole, or perforation arranged to reduce a cross-sectional area of the respective support member.

According to an embodiment, at least one support member comprises at least one section (e.g. a longitudinal section) having a first cross-sectional area, and at least one section (e.g. another longitudinal section) having a second cross-sectional area, the second cross-sectional area being smaller than the first cross-sectional area. Thus, at least one support member may comprise at least one section having a reduced cross-sectional area.

According to an embodiment, at least one support member comprises a plurality of sections each having said second cross-sectional area, those plurality of sections for example being spaced apart along a length of the support member.

According to an embodiment, each said section having said second cross-sectional area comprises at least one of: a groove; a notch; a hole; and a perforation.

According to an embodiment, the battery cell may comprises a positive electrode plate, a negative electrode, and separation layer disposed between the positive electrode plate and the negative electrode.

According to an embodiment, the battery cell may comprise a positive electrode plate, a negative electrode plate, and a separator disposed between the positive electrode plate and the negative electrode plate. These three components being wound or rolled together (e.g. around a winding or rolling axis) in a wound or rolled configuration or arrangement, having a spiral cross section, for example comprising a plurality of turns or layers. This spiral cross section may also be curved, arcuate, or bent, and the at least one support member may be arranged to support the battery cell against (i.e. to resist) straightening of the cross section under forces arising from resilience of the battery cell components.

According to an embodiment, at least one support member may be arranged to extend in a direction perpendicular to the winding or rolling axis or plane, and may be arranged to support the battery cell along at least a portion (e.g. 50% to 100%) of a length of the battery cell's cross section.

An electronic device according to an embodiment of the disclosure may include a flexible display, a display driver integrated circuit (IC) configured to drive the flexible display, a processor configured to control the operation of the display driver IC, memory operatively connected to the processor, and a battery configured to supply power to the display driver IC and the processor, the battery being in accordance with any one of the embodiments disclosed in the preceding paragraph.

Advantageous effects obtainable from the disclosure may not be limited to the above-mentioned effects, and other effects which are not mentioned may be clearly understood, through the following descriptions, by those skilled in the art to which the disclosure pertains.

## Claims

1. A curved battery (300) comprising:
a battery cell (301, 701) having a curved cross section; and
a housing (310) disposed outside the battery cell (301, 701),
wherein the battery cell (301, 701) comprises a positive electrode plate (341), a negative electrode plate (342), a separator (343) disposed between the positive electrode plate (341) and the negative electrode plate (342), a first electrode tab (320) electrically connected to at least a portion of the positive electrode plate (341), and a second electrode tab (330) electrically connected to at least a portion of the negative electrode plate (342),
wherein the positive electrode plate (341), the negative electrode plate (342), and the separator (343) are wound and disposed, and
wherein at least one of the first electrode tab (320) and the second electrode tab (330) overlaps at least a portion of the positive electrode plate (341) or the negative electrode plate (342).

2. The curved battery (300) of claim 1, wherein at least a portion of a stack surface for the positive electrode plate (341), the negative electrode plate (342), and the separator (343) comprises a curved surface.

3. The curved battery (300) of claim 1, wherein a stack surface for the positive electrode plate (341), the negative electrode plate (342), and the separator (343) comprises a sloped surface.

4. The curved battery (300) of claim 2 or 3, wherein the first electrode tab (320) is arranged to correspond to an uppermost surface of the positive electrode plate (341) from a first side (3411) to a second side (3412) of the uppermost surface, and
wherein the first electrode tab (320) is electrically bonded to the positive electrode plate at multiple points.

5. The curved battery (300) of claim 4, wherein the second electrode tab (330) is electrically bonded on the first side (3421) of an uppermost surface of the negative electrode plate (342).

6. The curved battery (300) of claim 2 or 3, wherein the second electrode tab (330) is arranged to correspond to an uppermost surface of the negative electrode plate (342) from a first side (3421) to a second side (3422) of the uppermost surface, and
wherein the second electrode tab (330) is electrically bonded to the negative electrode plate (342) at multiple points (335).

7. The curved battery (300) of claim 6, wherein the first electrode tab (320) is electrically bonded on the first side (3411) of the uppermost surface of the positive electrode plate (341).

8. The curved battery (300) of claim 2 or 3, wherein the first electrode tab (320) is arranged to correspond to an uppermost surface of the positive electrode plate (341) from a first side (3411) to a second side (3412) of the uppermost surface,
wherein the second electrode tab (330) is arranged to correspond of an uppermost surface of the negative electrode plate (342) from a first side (3421) to a second side (3422) of the uppermost surface,
wherein the first electrode tab (320) is electrically bonded to the positive electrode plate (341) at multiple points, and
wherein the second electrode tab (330) is electrically bonded to the negative electrode plate (342) at multiple points (335).

9. The electrostatic chuck (300) of one of claims 1 to 8, wherein the first electrode tab (320) or the second electrode tab (330) comprises holes (1110) arranged at predetermined intervals.

10. The electrostatic chuck (300) of one of claims 1 to 8, wherein the first electrode tab (320) or the second electrode tab (330) comprises grooves (1410) arranged at predetermined intervals.

11. The curved battery (300) of claim 9 or 10, wherein the first electrode tab (320) or the second electrode tab (330) comprises notches (1220) arranged at predetermined intervals.

12. The electrostatic chuck (300) of one of claims 1 to 11, wherein the curve of the battery cell (301, 701) has a curvature radius (R) of 50 mm to 500 mm.
